# EUROPÄISCHE PATENTSCHRIFT

(11) **EP 2 796 915 B1**
(45) Veröffentlichungstag und Bekanntmachung des Hinweises auf die Patenterteilung: **19.01.2022**
(21) Anmeldenummer: 14165488.9
(22) Anmeldetag: 22.04.2014
(51) Int. Cl.: G02B 21/24, G02B 21/26

(54) **Mikroskop mit mechanischem Autofokus und Verfahren zum Fokussieren auf ein zu mikroskopierendes Objekt**
Microscope with mechanical autofocus and method for focusing on an object to be used in a microscope
Microscope doté d'une mise au point mécanique et procédé destiné à régler la mise au point sur un objet à examiner au microscope

(30) Priorität: 26.04.2013 DE 102013207712
(43) Veröffentlichungstag der Anmeldung: 29.10.2014
(73) Patentinhaber: Hamilton Bonaduz AG, 7402 Bonaduz (CH)
(72) Erfinder: Städler, Andreas, 7012 Felsberg (CH)
(74) Vertreter: Ruttensperger Lachnit Trossin Gomoll

(56) Entgegenhaltungen:
- EP-A1- 1 703 312
- EP-A1- 1 726 940
- DE-A1- 2 621 811
- DE-A1-102007 056 754
- DE-T2- 60 305 149
- US-A1- 2002 015 223
- US-A1- 2004 224 315

## Beschreibung

Die vorliegende Erfindung betrifft ein Mikroskop mit den Merkmalen des Oberbegriffs des Anspruchs 1.

Ein gattungsgemäßes Mikroskop ist aus der EP 1 703 312 A1 bekannt.

Ein weiteres Mikroskop ist aus der US 2004/224315 A1 bekannt. Beide Druckschriften gehen von folgender Situation aus:
Häufig wird bei Lichtmikroskopen die zu mikroskopierende Probe manuell in den Fokus des Mikroskops, genauer des Objektivs, bewegt. Durch eine entsprechende Steuereinrichtung, wie etwa ein Handrad oder im Falle einer elektrischen Verlagerungseinrichtung ein Joystick, wird die Probe bzw. das zu betrachtende Objekt an die Stelle gebracht, an der ein scharfes Bild im Auge oder auf einem Bildschirm entsteht.

Manche Mikroskope erleichtern die Fokussierung, indem mittels eines Laserstrahls die Fokusposition ermittelt und die Probe entsprechend der so ermittelten Fokusposition positioniert werden kann. Häufig werden zur Fokussierung Triangulationsverfahren verwendet.

Objektträger, welche das zu betrachtende (mikroskopierende) Objekt auf der Objekt-Auflagefläche aufweisen, sind häufig so groß, dass mehrere voneinander verschiedene Stellen ein und desselben Objektträgers in die optische Achse des Objektivs bewegt werden, um entweder unterschiedliche Stellen ein und derselben Probe auf dem Objektträger zu betrachten oder um unterschiedliche, voneinander räumlich getrennte Proben auf dem Objektträger zu betrachten. Mögliche Objektträger sind beispielsweise Mikrotiterplatten, an welchen Proben aufnehmende Vertiefungen, sogenannte "Wells", matrixartig angeordnet sind.

Nachteilig ist, dass bei zahlreichen Objektträgern die Objekt-Auflagefläche von einer eigentlich gewünschten ideal-ebenen Gestalt abweicht. Bei einer ideal-ebenen Gestalt genügt die Fokussierung auf eine Probe, da üblicherweise die Objekt-Auflagefläche orthogonal zur optischen Achse des Mikroskop-Objektivs angeordnet ist und längs von in der Objekt-Auflagefläche gelegenen Richtungen, also orthogonal zur optischen Achse, verlagerbar ist. In diesem Falle reicht es bei ideal-ebenen Objekt-Auflageflächen aus, eine einzige Probe an einer einzigen Betrachtungsstelle einmal zu fokussieren. Da alle anderen Betrachtungsstellen von dem Objektiv des Mikroskops den gleichen axialen Abstand haben, wenn sie erst einmal zur Betrachtung in die optische Achse des Objektivs bewegt worden sind, erübrigt sich eine Nachjustierung der Fokussierung.

In der Realität sind die Objektträger jedoch fehlerbehaftet, und zwar häufig so, dass ihre Objekt-Auflagefläche von einer ideal-ebenen Auflagefläche abweicht. Wird dann der Objektträger ausgehend von einer fokussierten Betrachtungsstelle orthogonal zur optischen Achse des Objektivs zu einer anderen Betrachtungsstelle bewegt, ändert sich aufgrund der nicht ebenen Gestalt der Objekt-Auflagefläche der axiale Abstand der weiteren Betrachtungsstelle zum Objektiv, so dass mit dem "Anfahren" jeder weiteren Betrachtungsstelle auch ein erneutes Fokussieren notwendig sein kann. Gerade bei Mikrotiterplatten, mit im Matrix angeordneten Wells, beispielsweise 8 x 12 =96 Wells, kann das Mikroskopieren einer jeden in einem anderen Well befindlichen Probe aufgrund des wiederholten Fokussiererfordernisses zu einem unnötig langwierigen Prozess werden.

Dieser Nachteil wirkt sich besonders dann aus, wenn als Objektiv ein sogenanntes Unendlich-Objektiv verwendet wird, welches objektseitig eine endliche Brennweite hat, auf der dem zu betrachtenden Objekt abgewandten, also dem Auge des Betrachters zugewandten Seite jedoch eine unendlich große Brennweite aufweist, also idealerweise vom Objekt im Fokus herkommende und das Unendlich-Objektiv durchtretende Lichtstrahlen zueinander parallel auslässt. Bei derartigen Objektiven ist eine Fokussierung durch Änderung von Linsenabständen relativ zueinander im Objektivsystem nicht möglich, so dass zur Fokussierung stets eine Relativbewegung zwischen Objektträger und Unendlich-Objektiv notwendig ist.

Dieser Nachteil wird gemäß der EP 1 703 312 A1 und der US 2004/224315 A1 dadurch behoben, dass der Objektträger eine zur Objekt-Auflagefläche im Wesentlichen parallele Fokussierhilfe-Anlagefläche aufweist, wobei das Mikroskop weiter eine Fokussierhilfeeinrichtung mit einer Objektträger-Anlagefläche aufweist, die - bezogen auf die optische Achse - in festem axialem Abstand von einer dem Objektträger nächstgelegenen Linse des Unendlich-Objektivs vorgesehen ist und die zum Gleitanlageeingriff mit der Fokussierhilfe-Anlagefläche ausgebildet ist.

Durch den beschriebenen Gleitanlageeingriff zwischen der Fokussierhilfe-Anlagefläche des Objektträgers und der Objektträger-Anlagefläche der Fokussierhilfeeinrichtung kann ein definierter Zustand zwischen der Fokussierhilfe und dem Objektträger eingestellt werden. Da die Objektträger-Anlagefläche der Fokussierhilfeeinrichtung einen festen axialen Abstand von einer dem Objektträger nächstgelegenen Linse des Unendlich-Objektivs, bzw. von dem Linsensystem des Unendlich-Objektivs insgesamt, aufweist, weist das so erfindungsgemäß konfigurierte Objektiv dann, wenn der Gleitanlageeingriff zwischen der Fokussierhilfe-Anlagefläche und der Objektträger-Anlagefläche hergestellt ist, einen festen axialen Abstand von der Fokussierhilfe-Anlagefläche auf. Dadurch, dass Fokussierhilfe-Anlagefläche zur Objekt-Auflagefläche im Wesentlichen parallel ist, weist das Linsensystem bzw. die dem Objektträger nächstgelegene Linse des Unendlich-Objektivs auch einen festen axialen Abstand zu der Objekt-Auflagefläche auf. Dies bedeutet jedoch, dass sich die axiale Lage des Fokus des Unendlich-Objektivs relativ zur Objekt-Auflagefläche nicht ändert, selbst wenn die nicht-ebene Objekt-Auflagefläche orthogonal zur optischen Achse bewegt wird.

Der Gleitanlageeingriff zwischen der Fokussierhilfe-Anlagefläche und der Objektträger-Anlagefläche ermöglicht dabei eine Bewegung des Objektträgers und seiner Objekt-Auflagefläche im Wesentlichen orthogonal zur optischen Achse und gewährleistet die Unveränderlichkeit der axialen Relativposition der dem Objektträger nächstgelegenen Linse des Unendlich-Objektivs relativ zur Objekt-Auflagefläche und damit zur ausgewählten Betrachtungsfläche, während dieser Bewegung.

Es ist Aufgabe der vorliegenden Erfindung, ein Mikroskop der eingangs genannten Art weiter zu verbessern.

Diese Aufgabe wird gelöst durch ein Mikroskop mit allen Merkmalen des Anspruchs 1. Erfindungsgemäß ist vorgesehen, dass das Mikroskop einen Objektivträger mit einem Gehäuse aufweist, in welchem das Unendlich-Objektiv relativ zu diesem längs seiner optischen Achse beweglich federnd gelagert ist. In diesem Falle reicht es aus, ausschließlich das Unendlich-Objektiv relativ zum Objektträger zu verlagern, da die Fokussierhilfeeinrichtung gemäß obiger Ausführungen zur gemeinsamen Bewegung mit dem Unendlich-Objektiv gekoppelt ist.

Mit "axial" ist in dieser Anmeldung, sofern nicht anders angegeben, stets eine axiale Richtung bezogen auf die optische Achse des Unendlich-Objektivs bezeichnet.

Wenn oben von einem festen axialen Abstand zwischen den Anlageflächen: Fokussierhilfe-Anlagefläche und Objektivträger-Anlagefläche, die Rede ist, so ist zwar bevorzugt, dass dieser Abstand baulich fest und unveränderbar ist, jedoch ist dies nicht technisch notwendig. Ein fester axialer Abstand im Sinne der vorliegenden Erfindung ist auch dann erreicht, wenn der Abstand zwar grundsätzlich zur Justierung veränderbar ist, etwa durch einen Spindeltrieb und dergleichen, er jedoch durch betriebsbedingt auftretende Lasten nicht verändert werden kann, so dass sichergestellt ist, dass sich der feste axiale Abstand während und aufgrund des Betrachtungsbetriebs des Mikroskops nicht ändert.

Eine Fokussierhilfeeinrichtung mit in axialer Richtung justierbarer Objektträger-Anlagefläche kann beispielsweise dann von Vorteil sein, wenn an einem Mikroskop unterschiedliche Unendlich-Objektive zum Einsatz kommen, die eine unterschiedliche endliche objektseitige Brennweite aufweisen. Dann kann beispielsweise an einer Fokussierhilfeeinrichtung die Lage der Objektträger-Anlagefläche zu dem jeweiligen Unendlich-Objektiv passend eingestellt werden. Einfacher ist es jedoch, zu jedem Unendlich-Objektiv eine dazu passende starre Fokussierhilfeeinrichtung zu verwenden.

Um das zu betrachtende Objekt durch das Mikroskop und seine Bestandteile möglichst nicht zu beeinflussen, ist die Objekt-Auflagefläche vorteilhafterweise auf einer vom Unendlich-Objektiv abgewandten Seite des Objektträgers gelegen. In diesem Falle verläuft dann die optische Achse bei Betrachtung des wenigstens einen auf der Objekt-Auflagefläche befindlichen Objekts durch einen Abschnitt des Objektträgers hindurch, welcher zu diesem Zwecke bevorzugt optisch transparent ausgebildet ist. Dann ist es weiter vorteilhaft, wenn die Fokussierhilfe-Anlagefläche auf einer dem Unendlich-Objektiv zugewandten Seite des Objektträgers gelegen ist. In diesem Fall kann also der Gleitanlageeingriff zwischen Fokussierhilfe-Anlagefläche und Objektträger-Anlagefläche hergestellt werden, ohne dass die Fokussierhilfeeinrichtung in irgendeiner Weise Einfluss auf das wenigstens eine zu betrachtende Objekt nehmen könnte, da wenigstens der zuvor genannte Abschnitt des Objektträgers zwischen der Fokussierhilfeeinrichtung und dem wenigstens einen zu betrachtenden Objekt gelegen ist.

Grundsätzlich können am Objektträger beliebige Abschnitte ausgebildet sein, welche die Fokussierhilfe-Anlagefläche aufweisen. Diese können auch außerhalb eines Bereichs gelegen sein, in welchem das wenigstens eine zu betrachtende Objekt aufgenommen ist und welcher im Betrieb des Mikroskops von der optischen Achse durchsetzt wird.

Konstruktiv besonders einfach und sicher ist jedoch eine Weiterbildung der Erfindung zu betreiben, gemäß welcher der Objektträger einen diesen bei bestimmungsgemäßem Gebrauch zum Unendlich-Objektiv hin begrenzenden Boden aufweist, wobei eine vom Unendlich-Objektiv abgewandte außenliegende Objekt-Außenfläche des Bodens oder wenigstens ein Abschnitt derselben die Objekt-Auflagefläche ist und wobei eine der Objekt-Außenfläche entgegengesetzte außenliegende Objektiv-Außenfläche des Bodens oder wenigstens ein Abschnitt derselben die Fokussierhilfe-Anlagefläche ist. Dieser vorteilhaften Weiterbildung der vorliegenden Erfindung liegt die Erkenntnis zugrunde, dass transparente Böden von Objektträgern zwar nicht immer eine ideal-ebene Form, jedoch eine homogene, konstante Dicke wenigstens in dem Proben tragenden Bereich aufweisen. Somit kann dann, wenn die Objekt-Außenfläche des Bodens als Objekt-Auflagefläche genutzt wird, die entgegengesetzte Objektiv-Außenfläche ohne weitere Fertigungs- und Montagemaßnahmen als Fokussierhilfe-Anlagefläche genutzt werden, denn diese ist aufgrund der im Wesentlichen konstanten Dicke des Bodens tatsächlich im Wesentlichen parallel zu der Objekt-Außenfläche. Dies bedeutet: Objekt-Außenfläche und Objektiv-Außenfläche weichen in dem Proben tragenden Bereich im Wesentlichen an gleicher Stelle in gleicher Weise von der ideal-ebenen Gestalt ab.

Grundsätzlich kann daran gedacht sein, dass der oben genannte Gleitanlageeingriff immer dann hergestellt wird, wenn ein Objektträger auf einem entsprechenden Aufnahmetisch des Mikroskops zur Betrachtung montiert wird. Beispielsweise könnte die Fokussierhilfeeinrichtung mit der Objektträger-Anlagefläche axial über eine Betriebsposition der Fokussierhilfe-Anlagefläche hinaus vorgespannt sein, so dass beim Montieren eines Objektträgers auf einen Aufnahmetisch des Mikroskops zunächst der Gleitanlageeingriff hergestellt wird und dann Fokussierhilfe-Anlagefläche und mit ihr die an ihr anliegende Fokusierhilfeeinrichtung zusammen mit dem Unendlich-Objektiv in axialer Richtung gegen die Vorspannkraft in ihre Betriebsposition verstellt wird.

Vorteilhafter ist es jedoch, wenn das Mikroskop einen Antrieb aufweist, durch welchen die Objektträger-Anlagefläche und die Fokussierhilfe-Anlagefläche aneinander annäherbar und voneinander entfernbar sind, so dass der Gleitanlageeingriff gezielt hergestellt werden kann, wenn er benötigt wird, und aufgehoben werden kann, wenn er nicht benötigt wird. Dies ermöglicht zum einen die Verwendung unterschiedlicher Objektträger an ein und demselben Mikroskop und bietet zum anderen die Möglichkeit, die am Gleitanlageeingriff auftretenden Kräfte in vorteilhafter Weise zu reduzieren, wie weiter unten ausführlich erläutert werden wird.

Konstruktiv kann die Fokussierhilfeeinrichtung ein Zwischenbauteil bzw. eine Zwischenbaugruppe sein, welche einenends zur gemeinsamen Bewegung mit dem Unendlich-Objektiv gekoppelt ist und welche anderenends die Objektträger-Anlagefläche aufweist. Bevorzugt ist die Fokussierhilfeeinrichtung lösbar zur gemeinsamen Bewegung mit dem Unendlich-Objektiv gekoppelt, so dass an ein und demselben Unendlich-Objektiv unterschiedliche Fokussierhilfeeinrichtungen zum Einsatz kommen können oder wahlweise dann, wenn ein Mikroskopieren ohne Fokussierhilfeeinrichtung erfolgen soll, letztere weggelassen werden kann.

Gemäß einer besonders bevorzugten Weiterbildung der vorliegenden Erfindung kann die Fokussierhilfeeinrichtung eine den zum Objektträger hinweisenden Endbereich des Unendlich-Objektivs überspannende Haube umfassen. In dieser ist dann bevorzugt eine von der Objektträger-Anlagefläche umgebene optische Durchgangsöffnung vorgesehen, durch die hindurch das wenigstens eine zu betrachtende Objekt betrachtbar ist. Mit der Haube kann zusätzlich zu der Objektträger-Anlagefläche ein weiterer Schutz des Unendlich-Objektivs vor Verschmutzung und sonstigen äußeren Einflüssen bereitgestellt werden, da die Haube so ausgestaltet sein kann, dass sie den Bereich zwischen Unendlich-Objektiv und Objektträger im Betrachtungsbetrieb des Mikroskops vollständig umgibt und einfasst.

Die Haube kann vom Unendlich-Objektiv abnehmbar und auf dieses aufsetzbar sein. Durch Verrastungsmittel, wie etwa eine federvorbelastete Rastkugel, oder durch eine Bajonettsicherung kann die Haube verliersicher am Objektiv vorgesehen sein, ohne dass es durch Vorsehen dieser Verliersicherung zu nennenswerten Komplikationen beim Anbringen und beim Abnehmen der Haube kommen würde. Seitens des Unendlich-Objektivs kann an dessen Gehäuse ein Zentrierbund vorgesehen sein, der formschlüssig an einer entsprechenden Gegenformation der Fokussierhilfeeinrichtung anliegt, so dass der korrekte Sitz der Haube am Objektiv und damit auch die korrekte Position einer optischen Durchgangsöffnung in der Haube gewährleistet ist.

Vorzugsweise ist die Fokussierhilfeeinrichtung einstückig ausgebildet. Dies sorgt für besonders hohe Formstabilität, da keinerlei die Bauteilfestigkeit möglicherweise beeinträchtigende Fügestellen vorhanden sind. In diesem Falle besteht bevorzugt die Fokussierhilfeeinrichtung aus der zuvor genannten Haube.

Grundsätzlich kann daran gedacht sein, dass die Durchgangsöffnung ein die Fokussierhilfeeinrichtung in axialer Richtung durchsetzender Schlitz ist, welcher sich radial so weit in die Fokussierhilfeeinrichtung erstreckt, dass die optische Achse unbeeinträchtigt das zu betrachtende Objekt erreichen kann. Eine derartige Ausbildung könnte jedoch zu einer mechanischen Schwächung der Fokussierhilfeeinrichtung und damit zu einer unerwünschten Steifigkeitsverringerung führen. Daher ist bevorzugt daran gedacht, dass die Fokussierhilfe-Anlagefläche die optische Achse des Unendlich-Objektivs mit Da die Fokussierhilfeeinrichtung im Betrieb zur Herstellung des Gleitanlageeingriffs mit der Objektträger-Anlagefläche gegen die Fokussierhilfe-Anlagefläche bewegt wird, wird bei hergestelltem Gleitanlageeingriff erwartungsgemäß stets eine axiale Kraft auf die Objektträger-Anlagefläche einwirken, die zum Unendlich-Objektiv hin gerichtet ist. Diese Axialkraft lässt sich dann besonders einfach in ein Gehäuse des Unendlich-Objektivs ableiten, wenn die zur optischen Achse orthogonale Öffnungsfläche der Durchgangsöffnung kleiner ist als die zur optischen Achse orthogonale Öffnungsfläche einer dem Objektträger nächstgelegenen Öffnung des Unendlich-Objektivs. Besonders bevorzugt ist der Bereich zwischen der Objektträger-Anlagefläche und einer Befestigung der Fokussierhilfeeinrichtung am Unendlich-Objektiv von außerhalb der am Objektiv angeordneten Fokussierhilfeeinrichtung betrachtet konvex geformt, was eine weitere Formstabilisierung der Fokussierhilfeeinrichtung bewirkt. Beispielsweise sind auch Staumauern von der Druckseite aus betrachtet konvex geformt. Gleiches soll auch für eine bevorzugte Weiterbildung der hier diskutierten Fokussierhilfeeinrichtung, insbesondere in Form der oben genannten Haube, gelten.

Im Betrieb des Mikroskops kommt es darauf an, dass der Gleitanlageeingriff sicher aufrecht erhalten wird, auch und gerade wenn die Objekt-Auflagefläche und damit die zu ihr parallele Fokussierhilfe-Anlagefläche innerhalb vorbestimmter Toleranzgrenzen von einer ideal-ebenen Gestalt abweicht. Denn dann führt ein Bewegen der Fokussierhilfeeinrichtung im Gleitanlageeingriff parallel zur Fokussierhilfe-Anlagefläche zu einer axialen Bewegung der Fokussierhilfe und mit dieser des Unendlich-Mikroskops. Der Gleitanlageeingriff kann dabei grundsätzlich durch Federvorspannung der Fokussierhilfeeinrichtung zur Fokussierhilfe-Anlagefläche hin erreicht werden. Er kann zusätzlich oder alternativ auch durch den zuvor genannten Antrieb erreicht werden.

Allerdings führt eine einfache Hook'sche Feder als einzige Vorspanneinrichtung wie bei der EP 1 703 312 A1 dazu, dass die zwischen Fokussierhilfeeinrichtung und Objektträger wirkenden Axialkräfte betragsmäßig sehr stark abhängig von der jeweiligen Axialposition der Fokussierhilfeeinrichtung sein würden. Dies ist zwar grundsätzlich möglich, aber nicht bevorzugt. Um diese lineare Abhängigkeit zwischen einer wirkenden Axialkraft einerseits und der Axialposition der Fokussierhilfeeinrichtung andererseits abzuschwächen, ist gemäß der vorliegenden Erfindung vorgesehen, dass der Objektivträger eine wenigstens eine erste Feder aufweisende erste Federanordnung umfasst, welche zwischen Gehäuse und dem Unendlich-Objektiv vorgesehen ist, und dass der Objektivträger eine von der ersten gesondert ausgebildete wenigstens eine zweite Feder aufweisende zweite Federanordnung umfasst, welche ebenfalls zwischen Gehäuse und dem Unendlich-Objektiv vorgesehen ist, wobei die Verlaufsrichtung der Kraftwirkungslinie der Federkraft der wenigstens einen ersten Feder von der Verlaufsrichtung der Kraftwirkungslinie der Federkraft der wenigstens einen zweiten Feder in wenigstens einem Teil der zwischen dem Unendlich-Objektiv und dem Gehäuse bei bestimmungsgemäßem Gebrauch des Objektivträgers möglichen Relativstellungen, bevorzugt in einem Großteil der möglichen Relativstellungen, besonders bevorzugt in allen möglichen Relativstellungen, verschieden ist. Durch die Verschiedenheit der Verlaufsrichtungen der Kraftwirkungslinien der einzelnen Federanordnungen kann eine zwischen der Fokussierhilfe-Anlagefläche und der Objektträger-Anlagefläche wirkende Axialkraft betragsmäßig zumindest in einem betriebsmäßig relevanten Axialpositionsbereich (Arbeitsbereich) unabhängig oder zumindest weniger stark abhängig von der jeweiligen Axialposition der Fokussierhilfeeinrichtung gemacht werden, als dies bei einer reinen Hook'schen Feder der Fall wäre.

Dabei sind vorteilhafterweise dann, wenn eine Federanordnung mehrere Federn aufweist, die Kraftwirkungslinien der einzelnen Federn ein und derselben Federanordnung vorteilhafterweise bezüglich der optischen Achse symmetrisch orientiert. Dies kann beispielsweise derart realisiert sein, dass die Kraftwirkungslinie einer Feder in die Kraftwirkungslinie einer anderen Feder derselben Federanordnung durch Drehung um die optische Achse des Unendlich-Objektivs überführbar ist.

Dabei kann das Unendlich-Objektiv einen Hook'schen Bewegungsbereich aufweisen, in welchem die parallel zur optischen Achse wirkende Komponente der Federkraft der ersten Federanordnung relativ zum Gehäuse im Wesentlichen linear proportional zum Relativbewegungsweg des Unendlich-Objektivs ist. Eine solche Federanordnung ist konstruktiv besonders einfach und daher vorteilhaft zu realisieren.

Wenn jedoch aus den oben genannten Gründen gewünscht ist, dass das Unendlich-Objektiv und die zur gemeinsamen Bewegung damit gekoppelte Fokussierhilfeeinrichtung gerade keine Hook'sche Gesamtcharakteristik aufweisen sollen, dann ist bevorzugt weiter vorgesehen, dass die parallel zur optischen Achse wirkende axiale Komponente der Federkraft der zweiten Federanordnung in dem Hook'schen Bewegungsbereich des Unendlich-Objektivs relativ zum Gehäuse im Wesentlichen nicht linear proportional zum Bewegungsweg ist.

Dabei kann die zweite Federanordnung besonders vorteilhaft derart zwischen Unendlich-Objektiv und Objektträger vorgesehen sein, dass dann, wenn die axialen Kraftkomponenten der ersten und der zweiten Federkraft in die gleiche Richtung weisen, der Betrag der axialen Komponente der Federkraft der zweiten Federanordnung mit zunehmendem Betrag der axialen Komponente der Federkraft der ersten Federanordnung abnimmt und umgekehrt. Somit kann ein Zuwachs bzw. eine Abnahme an axialer Federkraftkomponente der ersten Federanordnung durch eine Abnahme bzw. einen Zuwachs der axialen Federkraftkomponente der zweiten Federanordnung in etwa kompensiert werden, so dass die axiale Gesamtfederkraftkomponente aus beiden Federanordnungen im Wesentlichen in dem genannten Relativbewegungsbereich des Unendlich-Objektivs unabhängig von der axialen Relativposition des Unendlich-Objektivs konstant bleibt oder sich nur unwesentlich ändert.

Eine besonders wirkungsvolle Änderung der Federkraft der zweiten Federanordnung abhängig von der Relativstellung des Unendlich-Objektivs zum Gehäuse des Objektivträgers kann dadurch realisiert sein, dass sich eine Neigung der Kraftwirkungslinie der wenigstens einen zweiten Feder bezüglich der optischen Achse oder, falls sich Kraftwirkungslinie und optische Achse nicht schneiden, bezüglich einer die Kraftwirkungslinie schneidenden Parallelen zur optischen Achse abhängig von der axialen Relativposition des Unendlich-Objektivs relativ zum Gehäuse ändert. Dies kann beispielsweise einfach durch Einbau der wenigstens einen zweiten Feder mit schräg zur optischen Achse orientierter Federachse zwischen Unendlich-Objektiv und Gehäuse realisiert sein.

Die Änderung der Neigung der Kraftwirkungslinie der wenigstens einen zweiten Feder bezüglich der optischen Achse ist dann besonders vorteilhaft, wenn der zwischen der Kraftwirkungslinie der wenigstens einen zweiten Feder und der optischen Achse beziehungsweise ihrer Parallelen eingeschlossene Neigungswinkel dann, wenn die axialen Komponenten der Federkräfte der ersten und der zweiten Federanordnung in die gleiche Richtung weisen, mit betragsmäßig in Abhängigkeit von der axialen Relativposition von Unendlich-Objektiv und Gehäuse abnehmender axialer Komponente der Federkraft der ersten Federanordnung kleiner wird. Da die axiale Komponente der Federkraft der zweiten Federanordnung proportional ist zum Cosinus des eingeschlossenen Neigungswinkels, kann durch die zuvor beschriebene Abhängigkeit des Neigungswinkels und der axialen Komponente der Federkraft der ersten Federanordnung von der axialen Relativposition des Unendlich-Objektivs zum Gehäuse des Objektivträgers sichergestellt werden, dass die axiale Komponente der zweiten Federkraft dann größer wird, wenn die axiale Komponente der ersten Federanordnung kleiner wird und umgekehrt. Somit kann über einen vorbestimmten Bewegungsbereich (Arbeitsbereich) hinweg eine im Wesentlichen konstante axiale Gesamtkraftwirkung aus der ersten und der zweiten Federanordnung bewirkt werden. Dies gilt dann, wenn die axialen Komponenten der Federkräfte der ersten und der zweiten Federanordnung in die gleiche Richtung weisen.

Weisen dagegen die axialen Komponenten der Federkräfte der ersten und der zweiten Federanordnung in unterschiedliche, also entgegengesetzte Richtungen, dann kann eine im Wesentlichen konstante axiale Gesamtkraftwirkung der ersten und der zweiten Federanordnung nur bereitgestellt werden, wenn die axiale Komponente der zweiten Federanordnung in Abhängigkeit von der axialen Relativposition des Unendlich-Objektivs zum Gehäuse des Objektivträgers sich betragsmäßig in gleicher Weise ändert wie die axiale Komponente der Federkraft der ersten Federanordnung. Dann ist sichergestellt, dass sich die Zuwächse der axialen Kraftkomponenten abhängig von der axialen Relativstellung von Objektiv und Gehäuse aufgrund ihrer entgegengesetzten Richtung gegenseitig aufheben. Dies kann wiederum zu einer zumindest in einem Arbeitsbereich im Wesentlichen konstanten axialen Gesamtkraftwirkung aus erster und zweiter Federanordnung führen.

Wenn aufgrund der konstruktiven Ausgestaltung der wenigstens einen zweiten Feder bei gleichgerichteten axialen Kraftkomponenten der ersten und der zweiten Federanordnung der Betrag der Federkraft der wenigstens einen zweiten Feder mit betragsmäßig abnehmender axialer Komponente der Federkraft der ersten Federanordnung ebenfalls abnimmt, ist es besonders bevorzugt, wenn der Betrag der Federkraft der zweiten Feder weniger stark abnimmt als der Cosinus des eingeschlossenen Neigungswinkels zunimmt.

In diesem letztgenannten Fall wird nämlich der gewünschte Effekt erreicht, dass die axiale Komponente der Federkraft der wenigstens einen zweiten Feder bzw. der zweiten Federanordnung dann, wenn alle zweiten Federn im Wesentlichen gleich ausgebildet sind, mit abnehmendem Betrag der gleichgerichteten axialen Komponente der Federkraft der ersten Federanordnung zunimmt. Als Folge kann zumindest in einem betriebsmäßig relevanten Axialpositionierungsbereich (Arbeitsbereich) des Unendlich-Objektivs relativ zum Gehäuse des Objektivträgers die resultierende axiale Gesamtkraftkomponente der ersten und der zweiten Federanordnung unabhängig von der Axialposition des Unendlich-Objektivs im Wesentlichen konstant gehalten werden.

Beispielsweise kann der Neigungswinkel bei Annäherung des Unendlich-Objektivs an den Objektträger kleiner werden. In diesem Falle wird dann, wenn das Unendlich-Objektiv mit der abnehmenden axialen Federkraftkomponente der ersten Federanordnung zu dem Objektträger hin verstellt wird, die axiale Federkraftkomponente der zweiten Federanordnung mit zunehmender Annäherung größer. Wiederum kann hierdurch ermöglicht werden, dass die axiale Gesamtkraft, die aus erster und zweiter Federanordnung auf das Unendlich-Objektiv einwirkt, während der Annäherung an den Objektträger unabhängig von der axialen Relativposition des Objektivs im Wesentlichen konstant bleibt. Zumindest kann diese näherungsweise Konstanz der ausgeübten axialen Gesamtfederkraft für einen bestimmten betriebsrelevanten Bewegungsbereich (Arbeitsbereich) erreicht werden.

Dann, wenn der Antrieb keinerlei Kraftwirkung auf das Objektiv relativ zum Gehäuse des Objektträgers ausübt - etwa weil er unbestromt oder mechanisch vollständig vom Objektiv getrennt ist - und sich die erste und die zweite Federanordnung mit dem Unendlich-Objektiv in einer Kraft-Gleichgewichtsposition befinden, beträgt der Neigungswinkel der wenigstens einen zweiten Feder zur optischen Achse 75° bis 90°. Der Neigungswinkel ist daher groß und die wenigstens eine zweite Feder kann bei diesem hohen Neigungswinkel eine betragsmäßig hohe Kraft entfalten, etwa aufgrund einer starken Kompression, die allerdings aufgrund des hohen Neigungswinkels und damit verbunden eines geringen Cosinus-Werts desselben nur eine geringe axiale Komponente aufweist. Die axiale Komponente der Federkraft der wenigstens einen zweiten Feder ist dabei der Betrag der Federkraft, multipliziert mit dem Cosinus des Neigungswinkels. Deshalb ist der Neigungswinkel in der oben beschriebenen Kraft-Gleichgewichtsposition besonders bevorzugt in einem Bereich von 80° bis 90° gelegen. Wird das Objektiv ausgehend von der Gleichgewichtsposition zum Objektträger hin verlagert, nimmt der Neigungswinkel ab, so dass der Cosinus des Neigungswinkels eigentlich zunimmt. Allerdings kann durch die Annäherung des Unendlich-Objektivs an den Objektträger gleichzeitig die wenigstens eine zweite Feder entspannt werden, so dass die von der wenigstens einen zweiten Feder auf das Objektiv wirkende Gesamtfederkraft betragsmäßig abnimmt. Diese Abnahme der Federkraft der wenigstens einen zweiten Feder aufgrund ihrer Entspannung kann kleiner sein als die Zunahme des Cosinus-Werts aufgrund der Änderung des Neigungswinkels, so dass die axiale Komponente der zweiten Federkraft insgesamt mit der Annäherung des Unendlich-Objektivs an den Objektträger zunimmt.

Für eine möglichst symmetrische Kraftausübung der ersten Federanordnung auf das Unendlich-Objektiv ist es vorteilhaft, wenn die erste Federanordnung zwei oder drei oder mehr erste Teilfederanordnungen umfasst, welche längs der optischen Achse mit Abstand voneinander angeordnet sind und von welchen jede zwei oder drei oder vier oder mehr erste Federn umfasst.

Aus Gründen besonders einfacher Fertigung und Montage ist die erste Teilfederanordnung einstückig ausgebildet. Die erste Teilfederanordnung kann dann aus einem ebenen Blech ausgestanzt oder ausgeschnitten sein, wenn sie im unbelasteten Zustand eine ebene Ausbildung aufweist. Diese ebene Ausbildung im unbelasteten Zustand ist im Einbauzustand orthogonal zur optischen Achse orientiert.

Bevorzugt ist der ebene, unbelastete Zustand der ersten Federanordnung oder Teilfederanordnung durch eine im Arbeitsbereich des Unendlich-Objektivs enthaltene axiale Relativposition des Unendlich-Objektivs relativ zum Objektivträgergehäuse erreichbar. Besonders bevorzugt liegt diese Relativposition axial zentral im Arbeitsbereich.

Dann, wenn die ersten Teilfederanordnungen in axialer Richtung mit Abstand voneinander angeordnet sind, kann das Unendlich-Objektiv stabil durch die aus den ersten Teilfederanordnungen gebildete erste Federanordnung aufgenommen und gegen ein Verdrehen um eine zur optischen Achse orthogonale Verdrehachse gesichert sein, ohne dass hierfür weitere Führungsmittel notwendig wären. Dies bedeutet, das Unendlich-Objektiv kann alleine durch die erste Teilfederanordnung ohne weitere Linearführungsmittel zur Bewegung längs der optischen Achse geführt sein.

Eine besonders raumsparende und gleichzeitig eine hohe vorherbestimmbare Federwirkung bereitstellende Federkonstruktion kann für die wenigstens eine erste Feder dadurch erreicht werden, dass die wenigstens eine erste Feder eine Blattfeder ist, deren eines Längsende mit dem Gehäuse verbunden ist und deren jeweils anderes Längsende mit dem Objektiv, gegebenenfalls unter Zwischenanordnung eines Objektivhalters, verbunden ist. Dann, wenn die wenigstens eine erste Feder zwischen ihren Längsenden gekrümmt ausgebildet ist, kann das Unendlich-Objektiv mit geringem radialem Luftspalt am Gehäuse des Objektivhalters vorgesehen sein. Aus diesem Grunde ist besonders bevorzugt die optische Achse die Krümmungsachse der wenigstens einen ersten Blattfeder.

Bei der Ausbildung der wenigstens einen Feder als Blattfeder ist es vorteilhaft, wenn die erste Blattfeder eine größere radiale als axiale Abmessung aufweist. In diesem Falle ist die Biegesteifigkeit der wenigstens einen ersten Feder um eine zur optischen Achse parallele Biegeachse ungleich höher als um eine zur optischen Achse orthogonale Biegeachse. Dadurch kann erreicht werden, dass sich bei vorgegebener äußerer Kraft die wenigstens eine erste Feder im Wesentlichen nur um eine zur optischen Achse orthogonale Biegeachse biegt, während eine Biegung der ersten Feder um eine zur optischen Achse parallele Biegeachse vernachlässigbar ist. Somit kann die wenigstens eine Feder in einem bestimmungsgemäßen axialen Bewegungsbereich des Unendlich-Objektivs als Linearführungsmittel dienen.

Besonders bevorzugt beträgt daher die radiale Abmessung der als Blattfeder ausgebildeten ersten Feder mehr als das Zehnfache, höchst bevorzugt mehr als das Zwanzigfache der axialen Abmessung derselben.

Aus Gründen einfacher Fertigung und Montage sind bevorzugt alle ersten Federn baugleich. Da an die ersten und die zweiten Federn, wie oben beschrieben, unterschiedliche Anforderungen gestellt werden, sind die zweiten Federn bevorzugt von anderer Bauart als die ersten Federn. Aus Gründen erleichterter Fertigung und Montage sind bevorzugt auch alle zweiten Federn von gleicher Bauart.

Die wenigstens eine zweite Feder kann vorteilhaft als Schenkelfeder ausgebildet sein, deren endseitige Federschenkel durch einen Blatt- oder Schraubenfederabschnitt miteinander verbunden sind. Dann kann ein freies Längsende eines Federschenkels mit dem Gehäuse und ein freies Längsende des jeweils anderen Federschenkels mit dem Objektiv verbunden sein. Gegebenenfalls kann zwischen dem anderen Federschenkel und dem Objektiv ein Objektivhalter zwischenangeordnet sein.

Denkbar ist alternativ auch die Ausbildung der wenigstens einen ersten Feder als Membranfeder und die Ausbildung der wenigstens einen zweiten Feder als Blattfeder.

Zur Bereitstellung einer möglichst definierten Vorspannkraft der zweiten Federanordnung kann vorgesehen sein, dass eines der Federwiderlager der wenigstens einen zweiten Feder, vorzugsweise ein gehäuseseitiges Federwiderlager, zur Änderung einer Vorspannung der wenigstens einen zweiten Feder verlagerbar ist.

Beispielsweise kann das Federwiderlager der wenigstens einen zweiten Feder von der Stirnseite einer Schraube, Gewindestange oder dergleichen gebildet sein, die durch Verdrehung relativ zu dem sie umgebenden Bauteil verlagerbar ist.

Dann, wenn der Antrieb am Objektivträger angreift und diesen relativ zu einem Mikroskopgehäuse verlagert, kann das Unendlich-Objektiv, gegebenenfalls unter Zwischenanordnung eines Objektivhalters, ausschließlich durch die erste und die zweite Federanordnung am Gehäuse des Objektivträgers gehalten sein. Weitere Kraft übertragende Anordnungen zwischen Unendlich-Objektiv bzw. Objektivhalter und Gehäuse sind nicht nötig.

Bevorzugt ist jedoch ein Kraftausgabeteil des Antriebs starr mit der Fokussierhilfeeinrichtung gekoppelt, was die vom Antrieb zu bewegende Masse erheblich verringert. In diesem Fall kann vorgesehen sein, dass das Unendlich-Objektiv, gegebenenfalls unter Zwischenanordnung eines Objektivhalters, ausschließlich durch die erste und die zweite Federanordnung sowie ein Kraftausgabebauteil des Antriebs am Gehäuse des Objektivträgers gehalten ist.

In dem genannten zweiten Fall, bei welchem ein Kraftausgabeteil des Antriebs starr mit der Fokussierhilfeeinrichtung gekoppelt ist, kann ein - verglichen mit dem davor genannten ersten Fall - kleinerer und leistungsschwächerer Antrieb zum Einsatz kommen. Der zweite Fall gestattet nämlich, dass die vom Antrieb zu überwindende Gewichtskraft des Objektivs und ggf. eines das Objektiv aufnehmenden Objektivhalters durch die beiden Federanordnungen kompensiert oder wenigstens verringert wird, so dass der Antrieb in einem Arbeitsbereich nicht die volle Gewichtskraft des Unendlich-Objektivs und ggf. des ihn aufnehmenden Objektivhalters aufbringen muss, um das Objektiv axial zu verlagern, sondern im Wesentlichen "nur" gegen die durch die Gewichtskraft von Objektiv und ggf. Objektivhalter vorgespannten Federanordnungen arbeiten muss. Wird das Objektiv aus einer ersten Stellung der beiden Federanordnungen heraus um eine vorbestimmte Strecke verlagert, muss der Antrieb also nur jenen Teil der Gewichtskraft vom Unendlich-Objektiv und ggf. Objekthalter aufbringen, welcher an der von der ersten Stellung abweichenden Position durch die beiden Federanordnungen noch nicht kompensiert wurde. Durch die oben beschriebenen bevorzugten Ausgestaltungen der ersten und der zweiten Federanordnung kann erreicht werden, dass die vom Antrieb aufzubringende Kraft in einem betriebsmäßig relevanten Arbeitsbereich etwa konstant ist. Der Arbeitsbereich kann beispielsweise ausgehend von einer axialen Mittelstellung in beide axialen Richtungen je etwa einen oder zwei Millimeter weit reichen.

Der Objektivhalter kann dabei eine Vorrichtung sein, in die das Unendlich-Objektiv am Objektivträger einfach eingesetzt werden kann, beispielsweise eine topfartige Vorrichtung, in welche das Unendlich-Objektiv mit einer üblicherweise zylindrischen Einhüllenden einfach eingesetzt werden kann. Bei obiger Beschreibung wurde von dem bevorzugten Fall ausgegangen, dass die optische Achse des Unendlich-Objektivs längs der Schwerkraft-Wirkungsrichtung verläuft.

Zur Erläuterung der Vorzüge des erfindungsgemäßen Verfahrens wird auf die obige ausführliche Beschreibung des Mikroskops bzw. des Objektivträgers verwiesen.

Nachfolgend wird die vorliegende Erfindung anhand der beiliegenden Figuren erläutert. Es stellt dar:
- Fig. 1: eine schematische Ansicht eines erfindungsgemäßen Mikroskops,
- Fig. 2: einen Objektivträger des Mikroskops von Fig. 1 in einer Ruhestellung bei unbestromtem Antrieb, d. h. die Gewichtskraft des objektivs wird alleine durch die erste und die zweite Federanordnung vollständig kompensiert,
- Fig. 3: eine Ansicht des Objektivträgers von Fig. 2 mit bestromtem Antrieb, wobei sich das Objektiv relativ zum Objektivträger in einer axial-zentralen Stellung des Arbeitsbereichs des Objektivs befindet, in der die ersten Federn der ersten Federanordnung nicht ausgelenkt sind,
- Fig. 4: der Objektivträger von Fig. 3 mit bezüglich der zentralen Stellung der Fig. 3 axial nach unten verlagertem Objektiv und
- Fig. 5: der Objektivträger von Fig. 3 mit bezüglich der zentralen Stellung des Objektivs relativ zum Gehäuse des Objektivträgers nach oben verlagertem Objektiv.

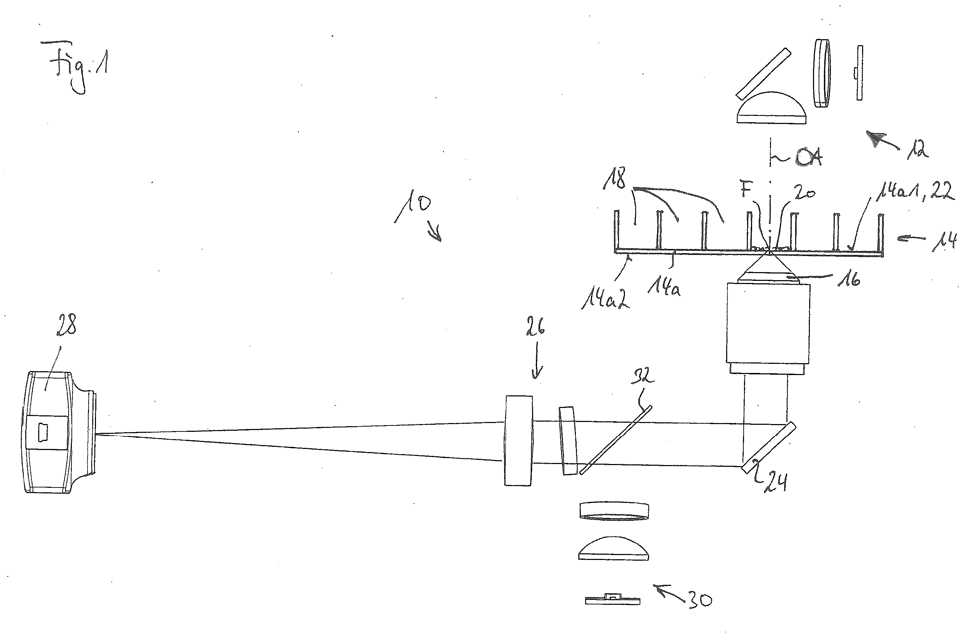

In Fig. 1 ist eine erfindungsgemäße Ausführungsform eines Mikroskops allgemein mit 10 bezeichnet. Das Mikroskop 10 umfasst in vorliegendem Beispiel eine Beleuchtungseinrichtung 12 zur Beleuchtung eines Objektträgers 14, welcher sich zwischen der Beleuchtungseinrichtung 12 und einem Unendlich-Objektiv 16 befindet. Die optische Achse des Unendlich-Objektivs 16 ist mit OA bezeichnet. Sie verläuft vorzugsweise orthogonal zu dem Boden 14a des Objektträgers 14.

Der Boden 14a des Objektträgers 14 ist bevorzugt aus optisch transparentem Material hergestellt, so dass Licht von der Beleuchtungseinrichtung 12 durch den Boden 14a zum Unendlich-Objektiv 16 hin hindurchtreten kann und so dass ein in Kompartments oder Wells 18 des Objektträgers 14 vorgesehenes zu betrachtendes Objekt 20, etwa adhärente Zellen, vom Unendlich-Objektiv 16 durch den Boden 14a des Objektträgers 14 hindurch beobachtbar bzw. betrachtbar sind.

Der Boden 14a weist eine vom Unendlich-Objektiv 16 weg weisende Objekt-Außenfläche 14a1 auf und weist eine entgegengesetzte, zum Unendlich-Objektiv 16 hin weisende Objektiv-Außenfläche 14a2 auf. Die adhärenten Zellen 20 oder allgemein eine zu betrachtende Probe befindet sich auf der Objekt-Außenfläche 14a1 des Bodens 14a.

In dem hier dargestellten Fall ist also die Objekt-Außenfläche 14a1 auch eine Objekt-Auflagefläche des Objektträgers 14, auf welchem zu betrachtende Objekte 20 zur Betrachtung angeordnet sind. Sie fällt daher im gezeigten Beispiel zusammen mit einer Betrachtungsfläche 22, welche durch den Fokus F des Unendlich-Objektivs 16 durch Fokussierung zur Betrachtung ausgewählt ist. Die Betrachtungsfläche 22 kann auch abweichend von der Objekt-Auflagefläche 14a1 parallel zu dieser ausgewählt sein. Sie liegt dann in größerer axialer Entfernung von dem Unendlich-Objektiv 16 als die in Fig. 1 gezeigte Objekt-Außenfläche 14a1.

Das Unendlich-Objektiv 16 weist in an sich bekannter Weise eine objektseitige endliche Brennweite auf und weist auf der vom Objekt abgewandten Seite eine unendliche Brennweite auf, was auf der vom zu betrachtenden Objekt 20 abgewandten Seite des Unendlich-Objektivs 16 durch den parallelen Strahlengang angedeutet ist.

Ein Umlenkspiegel 24 kann den von dem Unendlich-Objektiv 16 zum Betrachter hin ausgehenden Lichtstrahl umlenken und durch ein Austrittslinsensystem 26 zu einem Bildaufnahmesensor 28, etwa einem CCD-Sensor, hin bündeln.

Anstelle des Bildaufnahmesensors 28 kann ein Okular zur unmittelbaren Betrachtung des vom Unendlich-Mikroskop 16 und dem Austrittslinsensystem 26 bereitgestellten Bildes vorgesehen sein. Weiterhin kann ein betrachterseitiges Beleuchtungssystem 30 vorgesehen sein, um das zu betrachtende Objekt 20 über einen halbdurchlässigen Spiegel 32 auch von der Betrachterseite her zu beleuchten, so dass das zu betrachtende Objekt 20 zum einen im Durchlichtverfahren von der Beleuchtungseinrichtung 12 und im Auflichtverfahren von der Beleuchtungseinrichtung 30 beleuchtet wird.

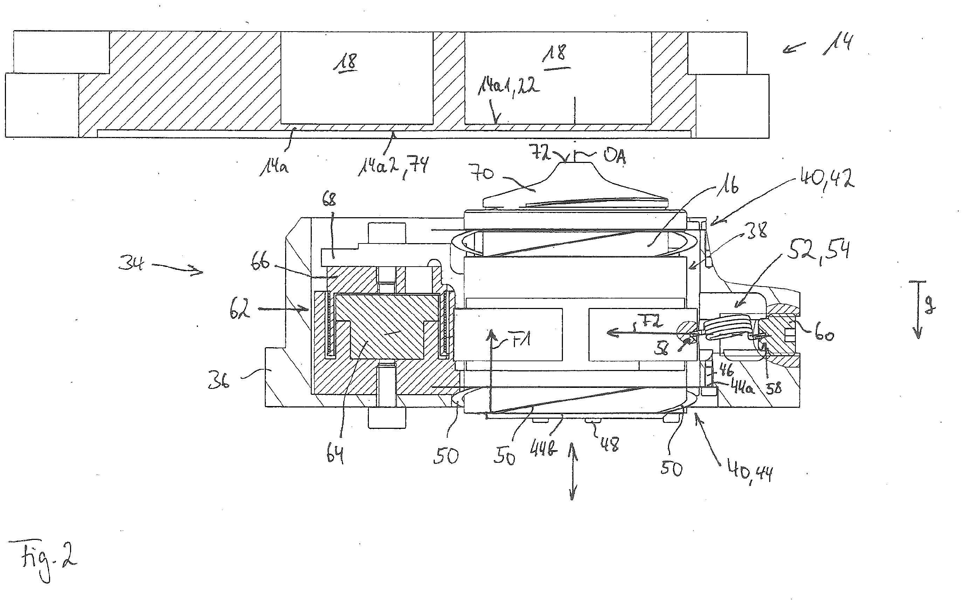

In Fig. 2 ist das in Fig. 1 lediglich grobschematische Unendlich-Objektiv 16 mit seinem Objektivträger 34 ausführlich dargestellt. Ebenso ist der Objektträger 14 in den Fig. 2 bis 5 gezeigt. Die vorliegende Erfindung wird nachfolgend insbesondere anhand der Fig. 2 bis 5 näher erläutert werden.

In Fig. 2 ist das Unendlich-Objektiv 16 in einen Objektivträger 34 eingesetzt dargestellt. Der Objektivträger 34 weist ein Gehäuse 36 auf, in welchem das Unendlich-Objektiv 16 mittels einer Objektivhalteranordnung 38 axial längs der optischen Achse OA beweglich in das Gehäuse 36 eingesetzt ist.

Zwischen der Objektivhalteranordnung 38 und dem Gehäuse 36 des Objektivträgers 34 ist eine erste Federanordnung 40 vorgesehen, welche aus zwei Teilfederanordnungen 42 und 44 gebildet sein kann.

Die erste Teilfederanordnung 42 ist im dargestellten Beispiel axial näher bei dem zu betrachtenden Objekt in einem Well 18 angeordnet als die Teilfederanordnung 44 der ersten Federanordnung. Durch den axialen Abstand zwischen den Teilfederanordnungen 42 und 44 kann das Unendlich-Objektiv 16 kippstabil am Gehäuse 36 des Objektivträgers 34 axial verlagerbar gelagert sein.

Die Teilfederanordnungen 42 und 44 der ersten Federanordnung sind vorteilhafterweise zueinander identisch ausgebildet, weshalb der Übersichtlichkeit halber nachfolgend nur die vom zu betrachtenden Objekt ferner gelegene Teilfederanordnung 44 beschrieben wird. Deren Beschreibung gilt jedoch ebenso für die Teilfederanordnung 42 der ersten Federanordnung 40.

Die Teilfederanordnung 44 kann aus einem ebenen Metallblech gestanzt oder sonstwie ausgeschnitten sein und umfasst einen, vorzugsweise ringförmigen, radial äußeren Befestigungsbereich 44a, mit welchem die Teilfederanordnung 44, etwa über Schrauben 46, an dem Gehäuse 36 festgelegt ist.

Weiter kann die Teilfederanordnung 44 einen radial inneren, vorzugsweise ringförmigen, Befestigungsbereich 44b aufweisen, mit welchem die Teilfederanordnung 44, etwa über Schrauben 48, mit der Objektivhalteranordnung 38 und damit mit dem Unendlich-Objektiv 16 fest verbunden ist. Die Erstreckungsebenen der im Wesentlichen ebenen Befestigungsbereiche 44a und 44b verlaufen im dargestellten Beispiel orthogonal zur Zeichenebene von Fig. 2 und orthogonal zur optischen Achse OA des Unendlich-Objektivs 16.

Radial - und abhängig von der Axialposition des Unendlich-Objektivs 16 relativ zum Gehäuse 36 auch axial - zwischen den beiden Befestigungsbereichen 44a und 44b kann wenigstens eine erste Feder 50 verlaufen. Im dargestellten Beispiel verlaufen über den Umfang um die optische Achse verteilt insgesamt vier erste Federn 50 zwischen dem radial äußeren Befestigungsbereich 44a und dem radial inneren Befestigungsbereich 44b. Eine in Fig. 2 nicht erkennbare vierte erste Feder 50 ist durch die Objektivhalteranordnung 38 verdeckt.

Die ersten Federn 50 der Teilfederanordnung 44 sind winkelmäßig um die optische Achse OA vorzugsweise äquidistant angeordnet, um eine möglichst gleichmäßige Krafteinleitung in die Objektivhalteranordnung 38 zu gewährleisten.

Jede erste Feder 50 ist bevorzugt als Blattfeder ausgetaltet, die mit ihrem einen Längsende mit dem äußeren Befestigungsbereich 44a, vorzugsweise integral, verbunden ist und die mit ihrem anderen Längsende, vorzugsweise integral, mit dem inneren Befestigungsbereich 44b verbunden ist.

Damit die ersten Federn bei äußerer Krafteinwirkung im Wesentlichen nur um eine zur optischen Achse orthogonale Biegeachse, nicht jedoch um eine zur optischen Achse OA parallele Biegeachse biegen, sind die ersten Federn 50 bezogen auf die optische Achse OA im entspannten ebenen Zustand in radialer Richtung mit einer wesentlich größeren Abmessung ausgebildet als in axialer Richtung, etwa um mehr als das 20-Fache in radialer Richtung breiter als in axialer Richtung dick.

Weiter sind aus Gründen einer möglichst effektiven Bauraumausnutzung die ersten Federn 50 gekrümmt ausgebildet, und zwar besonders bevorzugt mit der optischen Achse OA als Krümmungsachse. Somit sind die ersten Federn 50 ebenso wie das Unendlich-Objektiv 16 und auch vorzugsweise die Objektivhalteranordnung 38 zur optischen Achse OA konzentrisch angeordnet.

Zusammen mit der Teilfederanordnung 42 weist die erste Federanordnung in dem in den Fig. 2 bis 5 dargestellten Beispiel insgesamt acht erste Federn 50 auf, vier erste Federn 50 in jeder Teilfederanordnung 42 bzw. 44.

Durch die geschilderte Ausbildung mit wesentlich größerer radialer Breite als axialer Dicke ist es möglich, dass die erste Federanordnung nicht nur eine federnde Lagerung, sondern auch eine Führung des Unendlich-Objektivs zur axialen Bewegung bereitstellt.

Die von einer ersten Feder 50 auf letztendlich das Unendlich-Objektiv 16 ausgeübte Kraft ist in Fig. 2 in der dort gezeigten Ruhestellung, die weiter unten ausführlicher erläutert werden wird, mit dem Pfeil F1 dargestellt. Da die erste Federanordnung 40 im Wesentlichen nur durch die Gewichtskraft des Unendlich-Objektivs 16 und im vorliegenden Beispiel auch der Objektivhalteranordnung 38 belastet ist, die im dargestellten Beispiel parallel zur optischen Achse OA wirken, kann auch im Kraft-Gleichgewichtszustand bei herrschendem Kräftegleichgewicht nur eine axiale Kraft F1 an den einzelnen ersten Federn 50 der ersten Federanordnung 50 resultieren.

Weiter ist zwischen dem Gehäuse 36 und der Objektivhalteranordnung 38, also auch dem Unendlich-Objektiv 16, eine zweite Federanordnung 52 angeordnet, von der in den Fig. 2 bis 5 nur eine einzige zweite Feder 54 dargestellt ist.

Üblicherweise sind mehrere zweite Federn der zweiten Federanordnung vorhanden, bevorzugt in Umfangsrichtung um die optische Achse OA mit äquidistantem Abstand voneinander. Das vorliegend dargestellte Beispiel weist zwei zweite Federn 54 auf. Es könnten jedoch auch drei, vier oder mehr zweite Federn sein. Die dargestellte zweite Feder 54 ist von der nicht dargestellten zweiten Feder der zweiten Federanordnung 52 einen Winkelabstand von 180° um die optische Achse entfernt.

Die zweiten Federn 54 sind baulich von den ersten Federn 50 verschieden. Vorzugsweise sind alle ersten Federn 50 untereinander baugleich, ebenso wie bevorzugt alle zweiten Federn 54 untereinander baugleich sind.

Als Beispiel ist in Fig. 2 eine Schenkelfeder als zweite Feder 54 dargestellt, welche einenends an einem objektivseitigen Federwiderlager 56 und gehäuseseitig an einem Federwiderlager 58 abgestützt ist. Bevorzugt ist zur Einstellung der Vorspannkraft der zweiten Feder 54 eines der beiden Federwiderlager 56 und 58, hier: das gehäuseseitige Federwiderlager 58, verlagerbar ausgestaltet, beispielsweise an einer Stirnseite einer in das Gehäuse 36 eindrehbaren und aus diesem ausdrehbaren Schraube 60.

In Fig. 2 ist eine so genannte "Ruhestellung" des Unendlich-Objektivs im Objektivträger 34 gezeigt, bei welchem der Gewichtskraft des Unendlich-Objektivs 16 und des aufnehmenden Objektivhalteranordnung 38 ausschließlich Kräfte der ersten und der zweiten Federanordnung 40 bzw. 52 entgegenwirken. Die Kräfte befinden sich im Gleichgewicht.

Ein Axialantrieb 62 zur Verlagerung des Unendlich-Objektivs 16 längs seiner optischen Achse OA ist in dieser Ruhestellung nicht bestromt und daher kraftfrei.

In dieser Ruhestellung ist die von der zweiten Feder 54 ausgehende Federkraft in Fig. 2 mit Pfeil F2 bezeichnet. Ihre Kraftwirkungslinie geht durch die beiden Federwiderlager 56 und 58 der zweiten Feder 54 hindurch.

Die Länge der Pfeile F1 und F2 sind lediglich illustrierender Natur und geben keinerlei Rückschluss über die tatsächlichen betragsmäßigen Größenverhältnisse dieser beiden Kräfte.

Durch den Antrieb 62 kann das Unendlich-Objektiv 16 - im vorliegenden Falle gemeinsam mit der Objektivhalteranordnung 38 - gezielt axial verlagert werden. Bevorzugt handelt es sich bei dem Antrieb 62 um einen elektromagnetischen Linearantrieb, welcher ein permanentmagnetisches Statorbauteil 64 und einen mit einer elektromagnetischen Spule erregbaren Läufer 66 umfassen kann. Der Läufer 66 als relativbewegliches Bauteil bezogen auf das Gehäuse 36 des Objektivträgers 34 kann über ein Verbindungsbauteil 68, etwa eine Winkelstange, mit dem Unendlich-Objektiv 16 verbunden sein. Im vorliegenden Fall ist das Verbindungsbauteil 68 starr zur gemeinsamen axialen Bewegung unmittelbar mit der Objektivhalteranordnung 38 und somit mittelbar mit dem Unendlich-Objektiv 16 verbunden.

Eine Linearführung oder eine sonstige Führungseinrichtung abgesehen von den beiden Federanordnungen 40 und 52 ist in der bevorzugten Ausführungsform eines Objektivträgers 34 nicht vorgesehen. Die Linearführungsfunktion wird weitestgehend bzw. exklusiv von der ersten Federanordnung 40 geleistet.

Starr mit dem Unendlich-Objektiv 16 ist weiter eine Fokussierhilfe 70 verbunden, welche als bevorzugt haubenförmiges Bauteil auf das objektseitige Längsende des Unendlich-Objektivs 16 aufgesetzt ist.

Die Fokussierhilfe 70 weist an ihrem von dem Unendlich-Objektiv 16 fern liegenden Längsende eine Objektträger-Anlagefläche 72 auf, welche zum Gleitanlageeingriff mit einer Fokussierhilfe-Anlagefläche 74 des Objektträgers 14 ausgebildet ist. In dem bevorzugten Ausführungsbeispiel fällt die Fokussierhilfe-Anlagefläche 74 mit der Objektiv-Außenfläche 14a2 des Bodens 14a des Objektträgers 14 zusammen.

Mit ihrem der Objektträger-Anlagefläche 72 entgegengesetzten Längsende ist die im bevorzugten Ausführungsbeispiel vorzugsweise einstückig hergestellte haubenförmige Fokussierhilfeeinrichtung 70 auf einen nicht dargestellten Zentrierbund des Unendlich-Objektivs 16 oder der Objektivhalteranordnung 38 formschlüssig zentriert aufgesetzt und so zur gemeinsamen axialen Bewegung mit dem Unendlich-Objektiv 16 verbunden.

Die Objektträger-Anlagefläche 72 ist vorzugsweise ringförmig und läuft um eine Durchgangsöffnung der Fokussierhilfe 70 vollständig um, durch welche Licht von einer in einem Well 18 aufgenommenen Probe zum Unendlich-Objektiv 16 gelangen kann.

Da das Unendlich-Objektiv 16 auf seiner zum Objektträger 14 hin weisenden Objektseite eine vorbestimmte feste Brennweite aufweist, ist die axiale Lage der Fokusebene, in welcher das Unendlich-Objektiv 16 eine scharfe Abbildung liefert, relativ zum Unendlich-Objektiv vorbestimmt. Durch axiale Verlagerung des Unendlich-Objektivs 16 längs seiner optischen Achse OA wird somit auch die Fokusebene des Objektivs mitbewegt, so dass dadurch eine Betrachtungsfläche 22 in einem Well 18 auswählbar ist.

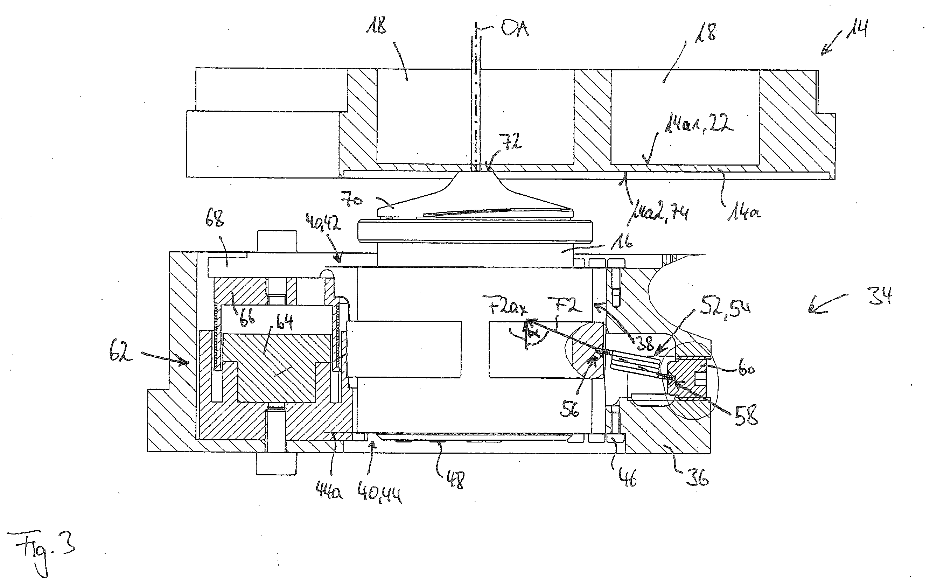

Nachfolgend wird anhand der Fig. 3 bis 5 die Funktionsweise der Fokussierhilfe 70 näher erläutert.

In Fig. 3 ist die Anordnung von Fig. 2 erneut dargestellt, jedoch ist der Linearantrieb 62 in eine axiale Position verfahren, in welcher die erste Federanordnung 40 entspannt ist und somit keinerlei Kraftbeitrag in axialer Richtung liefert. Die in Fig. 3 gezeigte Stellung sei in dem hier gezeigten Ausführungsbeispiel als eine axial-zentrale Stellung eines axialen Arbeitsbereichs des Unendlich-Objektivs 16 angenommen. Von dieser axial-zentralen Stellung aus kann das Unendlich-Objektiv innerhalb seines Arbeitsbereichs durch den Linearantrieb 62 axial noch weiter angehoben oder auch abgesenkt werden, und zwar bevorzugt aufgrund der Zentralität der in Fig. 3 gezeigten Stellung in beide Richtungen um die gleichen Verlagerungsbeträge.

In Fig. 3 ist die Objektträger-Anlagefläche 72 der Fokussierhilfe 70 durch Verlagerung des Unendlich-Objektivs 16 mittels des Linearantriebs 62 in Gleitanlageeingriff mit der Fokussierhilfe-Anlagefläche 74 des Objektträgers 14 gebracht worden. Einzig den Linearantrieb 62 unterstützende axiale Federkraftkomponente ist in dieser Stellung die axiale Federkraftkomponente der Federkraft F2 aller zweiten Federn 54 der zweiten Federanordnung 52.

Zwar wurde durch die axiale Verlagerung des Unendlich-Objektivs 16 im Vergleich zur Ruhestellung von Fig. 2 die zweite Feder 54 der zweiten Federanordnung 52 entspannt, denn die Federwiderlager 56 und 58 haben in der in Fig. 3 gezeigten Stellung einen größeren Abstand voneinander, jedoch wurde durch die axiale Verlagerung des Unendlich-Objektivs 16 auch die Kraftwirkungsrichtung der Kraft F2 der zweiten Feder 54 bezüglich der Objektivachse OA stärker geneigt, so dass der zwischen der Kraftwirkungsrichtung der Kraft F2 und einer parallel zur optischen Achse OA eingeschlossenen Neigungswinkel kleiner ist als in der Ruhestellung der Fig. 2, wo dieser Winkel nahezu 90° betrug. Da die Axialkraftkomponente der Kraft F2 der wenigstens einen zweiten Feder 54 dem Gesamtkraftbetrag der Kraft F2 multipliziert mit dem Consinus des Neigungswinkels entspricht, ist der Axialkraftbeitrag der zweiten Federanordnung 52 in der in Fig. 3 gezeigten Stellung größer als der in der Ruhestellung.

Der Betrag der Kraft F2 hat im Übergang von der Ruhestellung der Fig. 2 zu der axial-zentralen Arbeitsstellung von Fig. 3 weniger stark abgenommen als der Cosinus des Neigungswinkels zugenommen hat.

Die Axialkraftkomponente der Kraft F2 ist in Fig. 3 mit F2ax bezeichnet, der Neigungswinkel mit a.

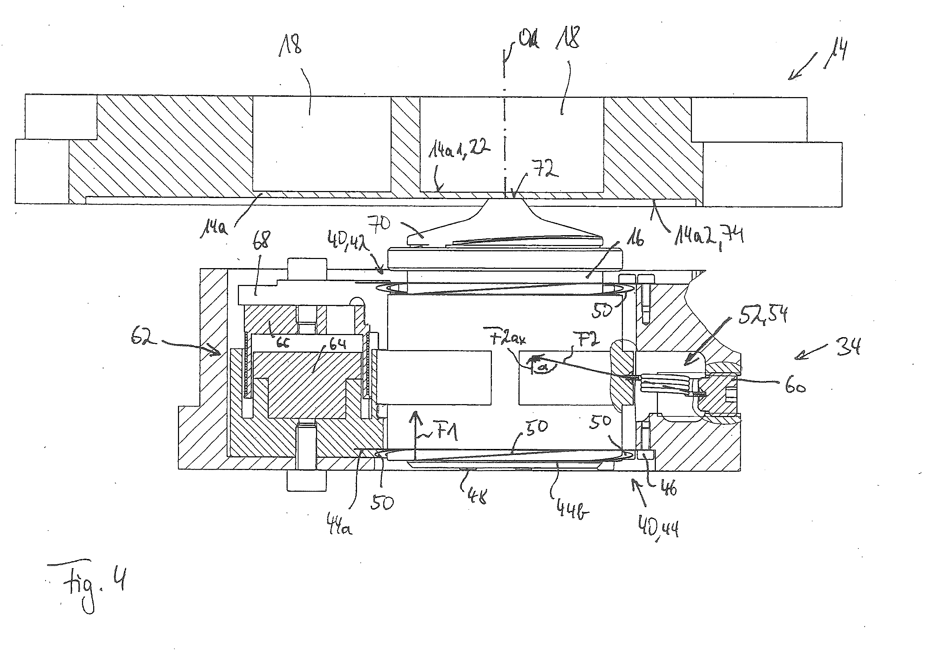

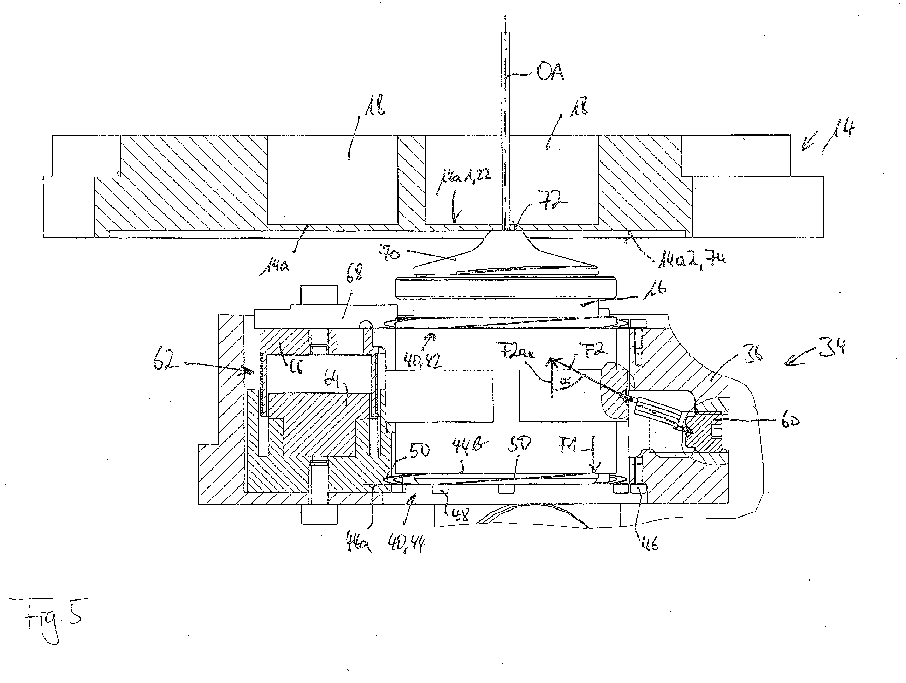

In den Fig. 4 und 5 ist nun gezeigt, wie die Fokussierhilfe 70 bei Veränderungen der Lage der zu betrachtenden Probe, also im Wesentlichen bei Veränderung der Lage des Bodens 14a und der dadurch definierten Objekt-Auflagefläche 14a1 aufgrund seiner Abweichung von einer ideal-ebenen Gestalt eine Position einer Betrachtungsfläche 22 relativ zur Objekt-Auflagefläche 14a1 beibehält.

Die nicht-ebene Gestalt des Bodens 14a des Objektträgers 14 und damit verbunden der Objekt-Auflagefläche 14a1, ist in Fig. 4 durch Annäherung des Objektträgers 14 an den Objektivträger 34 und in Fig. 5 durch Entfernung von diesem dargestellt. Dies entspricht einem zum Objektivträger 34 hin gekrümmten Objektträgerboden 14a (Fig. 4) und einem von diesem weg gekrümmten Objektträgerboden (Fig. 5).

Der Linearantrieb 62 liefert in dem durch die Fig. 3 bis 5 markierten Arbeitsbereich eine konstante axiale Kraft. Die Summe aus axialer Kraft des Linearantriebs 62, der resultierenden Axialkraft der ersten Federanordnung 40, der resultierenden Axialkraft der zweiten Federanordnung 52 sowie der Gewichtskraft des Unendlich-Objektivs 16, ggf. unter Hinzunahme der Gewichtskraft der Objektivhalteranordnung 38, ist in dem durch die Fig. 3 bis 5 markierten Arbeitsbereich in etwa konstant, so dass die Objektträger-Anlagefläche 72 in diesem Arbeitsbereich mit etwa konstanter Kraft gegen die Fokussierhilfe-Anlagefläche 74 gedrückt wird.

Da der Boden 14a des Objektträgers 14 im Wesentlichen eine über seine Fläche verteilt homogene konstante Dicke aufweist, sind die Objekt-Anlagefläche 14a1 und die Fokussierhilfe-Anlagefläche 74 im Wesentlichen zueinander parallel.

Ist der Boden 14a des Objektträgers 14 zum Objektivträger 34 hin gekrümmt, so wird dann, wenn der Objektträger 14 orthogonal zur optischen Achse des Unendlich-Objektivs 16 verstellt wird, um unterschiedliche Stellen des Objektträgers 14 zu mikroskopieren, das Unendlich-Objektiv 16 durch den Gleitanlageeingriff zwischen der Objektträger-Anlagefläche 72 und der Fokussierhilfe-Anlagefläche 74 mit zunehmender Verlagerung des Unendlich-Objektivs 16 hin zu stärker an den Objektivträger 34 angenäherten Bodenbereichen des Objektträgers 14 axial weiter in das Gehäuse 36 des Objektivträgers 34 eingedrückt. Dieses Eindrücken erfolgt gegen die Kraft des Linearantriebs 62.

Ist dagegen der Boden 14a des Objektträgers 14 von dem Objektivträger 34 weg gekrümmt, so wird bei entsprechender Verstellung durch die vom Linearmotor 62 ausgegebene Kraft das Unendlich-Objektiv 16 axial aus dem Gehäuse 36 ausgefahren und so die Anlageflächen 72 und 74 in Gleitanlageeingriff aneinander gehalten.

Dadurch, dass die Fokussierhilfe 70 mit ihrer Objektträger-Anlagefläche 72 eine feste axiale Abmessung aufweist und überdies zur gemeinsamen axialen Bewegung mit dem Unendlich-Objektiv 16 verbunden ist, ändert sich die relative Lage des objektseitigen Fokus des Unendlich-Objektivs 16 relativ zu dem Objektträger 14 nicht, wenn der Objektträger 14 orthogonal zur optischen Achse OA verfahren wird, und zwar auch dann nicht, wenn dessen Boden 14a innerhalb eines durch den Arbeitsbereich vorgegebenen Toleranzbereichs von der ideal-ebenen Gestalt abweicht.

Der Arbeitsbereich kann in der Realität einen axialen Bereich von etwa 3 mm bis 4 mm abdecken.

Unabhängig von der tatsächlichen Gestalt der Objekt-Auflagefläche 14a1 ändert sich somit die relative axiale Lage der Betrachtungsfläche 22 bezüglich der Objekt-Auflagefläche nicht, wenn der Objektträger 14 orthogonal zur optischen Achse verfahren wird. Eine Nachfokussierung kann somit entfallen.

## Patentansprüche

1. Mikroskop mit einem Objektträger (14), welcher eine Objekt-Auflagefläche (14a1) zur Auflage von zu betrachtenden Objekten (20) darauf oder zur Anlage derselben daran aufweist, sowie mit einem Unendlich-Objektiv (16), welches eine optische Objektivachse (OA) und eine objektseitige endlich große Brennweite aufweist, zur Betrachtung einer mittels Fokussierung ausgewählten oder auswählbaren Betrachtungsfläche (22), welche zur Objekt-Auflagefläche (14a1) parallel ist und vom Unendlich-Objektiv (16) im gleichen Abstand wie oder in einem größeren Abstand als die Objekt-Auflagefläche (14a1) gelegen ist,
wobei der Objektträger (14) eine zur Objekt-Auflagefläche (14a1) im Wesentlichen parallele Fokussierhilfe-Anlagefläche (74) aufweist, wobei das Mikroskop (10) weiter eine Fokussierhilfeeinrichtung (70) mit einer Objektträger-Anlagefläche (72) aufweist, die - bezogen auf die optische Achse (OA) - in festem axialem Abstand von einer dem Objektträger (14) nächstgelegenen Linse des Unendlich-Objektivs (16) vorgesehen ist und die zum Gleitanlageeingriff mit der Fokussierhilfe-Anlagefläche (74) ausgebildet ist, wobei es einen Objektivträger (34) mit einem Gehäuse (36) aufweist, in welchem das Unendlich-Objektiv (16) relativ zu diesem längs seiner optischen Achse (OA) beweglich federnd gelagert ist, wobei der Objektivträger (34) eine wenigstens eine erste Feder (50) aufweisende erste Federanordnung (40) umfasst, welche zwischen Gehäuse (36) und dem Unendlich-Objektiv (16) vorgesehen ist,
**dadurch gekennzeichnet, dass** der Objektivträger (34) eine von der ersten Feder (50) gesondert ausgebildete, wenigstens eine zweite Feder (54) aufweisende zweite Federanordnung (52) umfasst, welche ebenfalls zwischen Gehäuse (36) und dem Unendlich-Objektiv (16) vorgesehen ist, wobei die Verlaufsrichtung der Kraftwirkungslinie der Federkraft (F1) der wenigstens einen ersten Feder (50) von der Verlaufsrichtung der Kraftwirkungslinie der Federkraft (F2) der wenigstens einen zweiten Feder (54) in wenigstens einem Teil der zwischen dem Unendlich-Objektiv (16) und dem Gehäuse (36) bei bestimmungsgemäßem Gebrauch des Objektivträgers möglichen Relativstellungen verschieden ist.

2. Mikroskop nach Anspruch 1,
**dadurch gekennzeichnet, dass** die Objekt-Auflagefläche (14a1) auf einer vom Unendlich-Objektiv (16) abgewandten Seite des Objektträgers (14) gelegen ist und dass die Fokussierhilfe-Anlagefläche (74) auf einer dem Unendlich-Objektiv (16) zugewandten Seite des Objektträgers (14) gelegen ist.

3. Mikroskop nach Anspruch 2,
**dadurch gekennzeichnet, dass** der Objektträger (14) einen diesen bei bestimmungsgemäßem Gebrauch zum Unendlich-Objektiv (16) hin begrenzenden Boden (14a) aufweist, wobei eine vom Unendlich-Objektiv (16) abgewandte außenliegende Objekt-Außenfläche (14a1) des Bodens (14a) oder wenigstens ein Abschnitt derselben die Objekt-Auflagefläche (14a1) ist und wobei eine der Objekt-Außenfläche (14a1) entgegengesetzte außenliegende Objektiv-Außenfläche (14a2) des Bodens (14a) oder wenigstens ein Abschnitt derselben die Fokussierhilfe-Anlagefläche (74) ist.

4. Mikroskop nach einem der vorhergehenden Ansprüche,
**dadurch gekennzeichnet, dass** es einen Antrieb (62) aufweist, durch welchen die Objektträger-Anlagefläche (72) und die Fokussierhilfe-Anlagefläche (74) aneinander annäherbar und voneinander entfernbar sind.

5. Mikroskop nach Anspruch 4,
**dadurch gekennzeichnet, dass** der Antrieb (62) zur Übertragung von Antriebskraft starr mit der Fokussierhilfeeinrichtung (70) gekoppelt ist.

6. Mikroskop nach einem der vorhergehenden Ansprüche,
**dadurch gekennzeichnet, dass** die Fokussierhilfeeinrichtung (70) einenends zur gemeinsamen Bewegung mit dem Unendlich-Objektiv (16) gekoppelt ist, vorzugsweise lösbar gekoppelt ist, und andernends die Objektträger-Anlagefläche (72) aufweist, wobei bevorzugt die Fokussierhilfeeinrichtung (70) eine den zum Objektträger (14) hinweisenden Endbereich des Unendlich-Objektivs (16) überspannende Haube umfasst, in der eine von der Objektträger-Anlagefläche (72) umgebene optische Durchgangsöffnung vorgesehen ist.

7. Mikroskop nach einem der vorhergehenden Ansprüche,
**dadurch gekennzeichnet, dass** die Fokussierhilfe-Anlagefläche (72) die optische Achse (OA) des Unendlich-Objektivs (16) mit radialem Abstand unter Bildung einer optischen Durchgangsöffnung umgibt.

8. Mikroskop nach Anspruch 6 oder 7,
**dadurch gekennzeichnet, dass** die zur optischen Achse (OA) orthogonale Öffnungsfläche der Durchgangsöffnung kleiner ist als die zur optischen Achse (OA) orthogonale Öffnungsfläche einer dem Objektträger (14) nächstgelegenen Öffnung des Unendlich-Objektivs (16).

9. Mikroskop nach einem der vorhergehenden Ansprüche,
**dadurch gekennzeichnet, dass** die Verlaufsrichtung der Kraftwirkungslinie der Federkraft (F1) der wenigstens einen ersten Feder (50) von der Verlaufsrichtung der Kraftwirkungslinie der Federkraft (F2) der wenigstens einen zweiten Feder (54) in einem Großteil der möglichen Relativstellungen, bevorzugt in allen möglichen Relativstellungen verschieden ist.

10. Mikroskop nach einem der vorhergehenden Ansprüche,
**dadurch gekennzeichnet, dass** die parallel zur optischen Achse (OA) wirkende Komponente der Federkraft (F1) der ersten Federanordnung (40) in einem Hook'schen Bewegungsbereich des Unendlich-Objektivs (16) relativ zum Gehäuse im Wesentlichen linear proportional zum Relativbewegungsweg ist.

11. Mikroskop nach Anspruch 10,
**dadurch gekennzeichnet, dass** die parallel zur optischen Achse (OA) wirkende axiale Komponente (72ax) der Federkraft (F2) der zweiten Federanordnung (52) in dem Hook'schen Bewegungsbereich des Unendlich-Objektivs (16) relativ zum Gehäuse (36) im Wesentlichen nicht linear proportional zum Bewegungsweg ist.

12. Mikroskop nach Anspruch 11,
**dadurch gekennzeichnet, dass** sich eine Neigung der Kraftwirkungslinie (F2) der wenigstens einen zweiten Feder (54) bezüglich der optischen Achse (OA) oder, falls sich Kraftwirkungslinie (F2) und optische Achse (OA) nicht schneiden, bezüglich einer die Kraftwirkungslinie (F2) schneidenden Parallelen zur optischen Achse (OA) abhängig von der axialen Relativposition des Unendlich-Objektivs (16) relativ zum Gehäuse (36) ändert.

13. Mikroskop nach Anspruch 12,
**dadurch gekennzeichnet, dass** der zwischen der Kraftwirkungslinie (F2) der wenigstens einen zweiten Feder (54) und der optischen Achse (OA) beziehungsweise ihrer Parallelen eingeschlossene Neigungswinkel (α) mit einer axialen Relativverlagerung des Unendlich-Objektivs (16) relativ zum Gehäuse (36) kleiner wird, wobei bevorzugt dann, wenn die axialen Komponenten der Federkräfte der ersten und der zweiten Federanordnung (40, 52) in die gleiche Richtung weisen, der Betrag der Federkraft der zweiten Feder (54) mit einer aufgrund der axialen Relativverlagerung betragsmäßig abnehmenden axialen Komponente der Federkraft (F1) der ersten Federanordnung (40) ebenfalls abnimmt, besonders bevorzugt jedoch weniger stark abnimmt als der Cosinus des eingeschlossenen Neigungswinkels (α) zunimmt.

14. Mikroskop nach einem der Ansprüche 9 bis 13,
**dadurch gekennzeichnet, dass** die erste Federanordnung (40) zwei oder drei oder mehr erste Teilfederanordnungen (42, 44) umfasst, welche längs der optischen Achse (OA) mit Abstand voneinander angeordnet sind und von welchen jede zwei oder drei oder vier oder mehr erste Federn (50) umfasst.

15. Mikroskop nach einem der Ansprüche 9 bis 14,
**dadurch gekennzeichnet, dass** die wenigstens eine erste Feder (50) eine Blattfeder ist, deren eines Längsende mit dem Gehäuse (36) verbunden ist und deren jeweils anderes Längsende mit dem Unendlich-Objektiv (16), gegebenenfalls unter Zwischenanordnung eines Objektivhalters (38), verbunden ist, wobei bevorzugt die wenigstens eine erste Feder (50) zwischen ihren Längsenden gekrümmt ausgebildet ist, besonders bevorzugt mit der optischen Achse (OA) als der Krümmungsachse.

16. Mikroskop nach Anspruch 15,
**dadurch gekennzeichnet, dass** die Blattfeder (50) eine größere radiale als axiale Abmessung aufweist, vorzugsweise ihre radiale Abmessung mehr als das 5-fache, besonders bevorzugt mehr als das 10-fache, höchstbevorzugt mehr als das 20-fache der axialen Abmessung beträgt.

17. Mikroskop nach einem der Ansprüche 9 bis 16,
**dadurch gekennzeichnet, dass** die wenigstens eine zweite Feder (54) eine Schenkelfeder ist, deren endseitige Federschenkel durch einen Blatt- oder Schraubenfederabschnitt miteinander verbunden sind, wobei ein freies Längsende eines Federschenkels mit dem Gehäuse (36) und ein freies Längsende des jeweils anderen Federschenkels mit dem Objektiv (16), gegebenenfalls unter Zwischenanordnung eines Objektivhalters (38), verbunden ist.

18. Mikroskop nach einem der Ansprüche 9 bis 17,
**dadurch gekennzeichnet, dass** eines der Federwiderlager (56, 58) der wenigstens einen zweiten Feder (54), vorzugsweise ein gehäuseseitiges Federwiderlager (58), zur Änderung einer Vorspannung der wenigstens einen zweiten Feder (54) verlagerbar ist.

19. Mikroskop nach einem der Ansprüche 9 bis 18,
**dadurch gekennzeichnet, dass** das Unendlich-Objektiv (16), gegebenenfalls unter Zwischenanordnung eines Objektivhalters (38), ausschließlich durch die erste und die zweite Federanordnung (40, 52) am Gehäuse (36) des Objektivträgers (34) gehalten ist.

20. Mikroskop nach einem der Ansprüche 9 bis 18, unter Einbeziehung des Anspruchs 5,
**dadurch gekennzeichnet, dass** das Unendlich-Objektiv (16), gegebenenfalls unter Zwischenanordnung eines Objektivhalters (38), ausschließlich durch die erste und die zweite Federanordnung (40, 52) sowie ein Kraftausgabebauteil (66) des Antriebs (62) am Gehäuse (36) des Objektivträgers (34) gehalten ist.

## Claims

1. Microscope with a specimen stage (14) which exhibits a specimen supporting surface (14a1) for supporting thereon specimens (20) to be viewed or for bearing the same thereon, and with an infinity object lens (16) which exhibits an optical object lens axis (OA) and a specimen-side finite-size focal length, for viewing a viewing area (22) selected or selectable by means of focusing which is parallel to the specimen supporting surface (14a1) and located at the same distance as or at a greater distance than the specimen supporting surface (14a1) from the infinity object lens (16),
Where the specimen stage (14) exhibits a focusing aid bearing surface (74) essentially parallel to the specimen supporting surface (14a1), where the microscope (10) further exhibits a focusing aid device (70) with a specimen stage bearing surface (72), which is provided - relative to the optical axis (OA) - at a fixed axial distance from a lens of the infinity object lens (16) nearest to the specimen stage (14) and which is configured for sliding engagement with the focusing aid bearing surface (74), where it exhibits an object lens carrier (34) with a housing (36) in which the infinity object lens (16) is mounted springily moveable relative to it along its optical axis (OA), where the object lens carrier (34) comprises a first spring arrangement (40) exhibiting at least one first spring (50) which is provided between the housing (36) and the infinity object lens (16),
**Characterized in that** the object lens carrier (34) comprises a second spring arrangement (52) likewise provided between the housing (36) and the infinity object lens (16), exhibiting at least one second spring (54) and configured separately from the first spring (50), where the direction of the line of action of the spring force (F1) of the at least one first spring (50) differs from the direction of the line of action of the spring force (F2) of the at least one second spring (54) in at least part of the relative positions possible between the infinity object lens (16) and the housing (36) under proper use of the object lens carrier.

2. Microscope in accordance with Claim 1,
**Characterized in that** the specimen supporting surface (14a1) is located on a side of the specimen stage (14) facing away from the infinity object lens (16) and that the focusing aid bearing surface (74) is located on a side of the specimen stage (14) facing towards the infinity object lens (16).

3. Microscope in accordance with Claim 2,
**Characterized in that** the specimen stage (14) exhibits a bottom (14a) that under proper use bounds it towards the infinity object lens (16), where an external specimen outer surface (14a1) of the bottom (14a) facing away from the infinity object lens (16) or at least a section of same is the specimen supporting surface (14a1) and where an external object lens outer surface (14a2) of the bottom (14a) opposite to the specimen outer surface (14a1) or at least a section of same is the focusing aid bearing surface (74).

4. Microscope in accordance with one of the preceding Claims,
**Characterized in that** it exhibits a drive (62), by means of which the specimen stage bearing surface (72) and the focusing aid bearing surface (74) can be moved closer to one another and further away from one another.

5. Microscope in accordance with Claim 4,
**Characterized in that** the drive (62) is coupled rigidly with the focusing aid device (70) for the transmission of driving force.

6. Microscope in accordance with one of the preceding Claims,
**Characterized in that** the focusing aid device (70) is coupled, preferably coupled detachably, at one end with the infinity object lens (16) for common movement, and at the other end exhibits the specimen stage bearing surface (72), where preferably the focusing aid device (70) comprises a hood spanning the end-region of the infinity object lens (16) facing towards the specimen stage (14), in which an optical opening surrounded by the specimen stage bearing surface (72) is provided.

7. Microscope in accordance with one of the preceding Claims,
**Characterized in that** the focusing aid bearing surface (72) surrounds the optical axis (OA) of the infinity object lens (16) at a radial distance, forming an optical opening.

8. Microscope in accordance with Claim 6 or 7,
**Characterized in that** the aperture area of the opening orthogonal to the optical axis (OA) is smaller than the aperture area orthogonal to the optical axis (OA) of an aperture of the infinity object lens (16) nearest to the specimen stage (14).

9. Microscope in accordance with one of the preceding Claims,
**Characterized in that** the direction of the line of action of the spring force (F1) of the at least one first spring (50) differs from the direction of the line of action of the spring force (F2) of the at least one second spring (54) in a majority of the possible relative positions, preferably in all possible relative positions.

10. Microscope in accordance with one of the preceding Claims,
**Characterized in that** the component of the spring force (F1) of the first spring arrangement (40) acting parallel to the optical axis (OA) is essentially linearly proportional to the relative movement path in a Hooke's law-compliant movement range of the infinity object lens (16) relative to the housing.

11. Microscope in accordance with Claim 10,
**Characterized in that** the axial component (72ax) of the spring force (F2) of the second spring arrangement (52) acting parallel to the optical axis (OA) is essentially not linearly proportional to the movement path in the Hooke's law-compliant movement range of the infinity object lens (16) relative to the housing (36).

12. Microscope in accordance with Claim 11,
**Characterized in that** a tilt of the line of action (F2) of the at least one second spring (54) relative to the optical axis (OA) or, if the line of action (F2) and the optical axis (OA) do not intersect, relative to a parallel to the optical axis (OA) intersecting the line of action (F2), changes as a function of the axial relative position of the infinity object lens (16) relative to the housing (36).

13. Microscope in accordance with Claim 12,
**Characterized in that** the tilt angle (α) included between the line of action (F2) of the at least one second spring (54) and the optical axis (OA) and/or their parallels respectively decreases with an axial relative displacement of the infinity object lens (16) relative to the housing (36), where preferably when the axial components of the spring forces of the first and of the second spring arrangement (40, 52) point in the same direction, along with an absolute decrease in the axial component of the spring force (F1) of the first spring arrangement (40) due to the axial relative displacement the magnitude of the spring force of the second spring (54) likewise decreases, especially preferably however decreases less sharply than the increase in the cosine of the included tilt angle (α).

14. Microscope in accordance with one of the Claims 9 to 13,
**Characterized in that** the first spring arrangement (40) comprises two or three or more first partial spring arrangements (42, 44), which are arranged along the optical axis (OA) at a distance from one another and of which each comprises two or three or four or more first springs (50).

15. Microscope in accordance with one of the Claims 9 to 14,
**Characterized in that** the at least one first spring (50) is a leaf spring, whose one longitudinal end is connected with the housing (36) and whose other longitudinal end respectively is connected with the infinity object lens (16), possibly with the interposition of a lens mount (38), where preferably the at least one first spring (50) is configured as curved between its longitudinal ends, especially preferably with the optical axis (OA) as the axis of curvature.

16. Microscope in accordance with Claim 15,
**Characterized in that** the leaf spring (50) exhibits a greater radial than axial size, preferably its radial size being more than 5 times, especially preferably more than 10 times, most preferably more than 20 times the axial size.

17. Microscope in accordance with one of the Claims 9 to 16,
**Characterized in that** the at least one second spring (54) is a torsion spring, whose end-side spring legs are connected with one another by means of a leaf or helical spring section, where a free longitudinal end of a spring leg is connected with the housing (36) and a free longitudinal end of the other spring leg respectively is connected with the object lens (16), possibly with the interposition of a lens mount (38).

18. Microscope in accordance with one of the Claims 9 to 17,
**Characterized in that** one of the spring abutments (56, 58) of the at least one second spring (54), preferably a housing-side spring abutment (58), is relocatable for modifying a pre-tensioning of the at least one second spring (54).

19. Microscope in accordance with one of the Claims 9 to 18,
**Characterized in that** the infinity object lens (16), possibly with the interposition of a lens mount (38), is held at the housing (36) of the object lens carrier (34) solely by means of the first and the second spring arrangement (40, 52).

20. Microscope in accordance with one of the Claims 9 to 18, by reference to Claim 5,
**Characterized in that** the infinity object lens (16), possibly with the interposition of a lens mount (38), is held at the housing (36) of the object lens carrier (34) solely by means of the first and the second spring arrangement (40, 52) and a force output component (66) of the drive (62).

## Revendications

1. Microscope avec un porte-objet (14), qui présente une surface de support d'objet (14a1) pour le support d'objets à observer (20) sur celle-ci ou pour l'appui de ceux-ci sur celle-ci, ainsi qu'avec un objectif à l'infini (16), qui présente un axe optique d'objectif (OA) et une distance focale de dimension finie du côté de l'objet, pour observer une surface d'observation (22) sélectionnée ou pouvant être sélectionnée au moyen d'une focalisation, qui est parallèle à la surface de support d'objet (14a1) et qui est située à la même distance que la surface de support d'objet (14a1) ou à une distance plus grande que celle-ci par rapport à l'objectif à l'infini (16),
ans lequel le porte-objet (14) a une surface d'appui d'aide à la focalisation (74) sensiblement parallèle à la surface de support d'objet (14a1), dans lequel le microscope (10) comprend en outre un dispositif d'aide à la focalisation (70) ayant une surface d'appui de porte-objet (72), qui est prévue à une distance axiale fixe, par rapport à l'axe optique (OA), d'une lentille de l'objectif à l'infini (16) la plus proche du porte-objet (14) et qui est conçue pour venir en contact d'appui coulissant avec la surface d'appui d'aide à la focalisation (74), dans lequel il comprend un porte-objectif (34) avec un boîtier (36) dans lequel l'objectif à l'infini (16) est monté élastiquement de manière mobile par rapport à celui-ci le long de son axe optique (OA), dans lequel le porte-objectif (34) comprend un premier agencement de ressort (40) comprenant au moins un premier ressort (50), lequel est prévu entre le boîtier (36) et l'objectif à l'infini (16),
**caractérisé en ce que** le porte-objectif (34) comprend un deuxième agencement de ressort (52) réalisé séparément du premier ressort (50) et présentant au moins un deuxième ressort (54), lequel est également prévu entre le boîtier (36) et l'objectif à l'infini (16), dans lequel la direction de la ligne d'action de la force élastique (F1) dudit au moins premier ressort (50) est différente de la direction de la ligne d'action de la force élastique (F2) dudit au moins deuxième ressort (54) dans au moins une partie des positions relatives possibles entre l'objectif à l'infini (16) et le boîtier (36) lors de l'utilisation conforme du porte-objectif.

2. Microscope selon la revendication 1,
**caractérisé en ce que** la surface de support d'objet (14a1) est située sur un côté du porte-objet (14) opposé à l'objectif à l'infini (16) et **en ce que** la surface d'appui d'aide à la focalisation (74) est située sur un côté du porte-objet (14) tourné vers l'objectif à l'infini (16).

3. Microscope selon la revendication 2,
**caractérisé en ce que** le porte-objet (14) présente un fond (14a) qui le délimite en direction de l'objectif à l'infini (16) en cas d'utilisation conforme, dans lequel une surface de support d'objet (14a1) du fond (14a) opposée à l'objectif à l'infini (16) ou au moins une partie de celle-ci forme la surface de support d'objet (14a1) et dans lequel une surface extérieure d'objectif (14a2) du fond (14a) opposée à la surface de support d'objet (14a1) ou au moins une partie de celle-ci forme la surface d'appui d'aide à la focalisation (74).

4. Microscope selon l'une quelconque des revendications précédentes,
**caractérisé en ce qu'**il comporte un entraînement (62) permettant de rapprocher et d'éloigner la surface d'appui de porte-objet (72) et la surface d'appui d'aide à la focalisation (74).

5. Microscope selon la revendication 4,
**caractérisé en ce que** l'entraînement (62) est couplé de manière rigide au dispositif d'aide à la focalisation (70) pour la transmission de la force d'entraînement.

6. Microscope selon l'une des revendications précédentes,
**caractérisé en ce que** le dispositif d'aide à la focalisation (70) est couplé à une extrémité, de préférence de manière amovible, à l'objectif à l'infini (16) pour un mouvement commun, et présente à l'autre extrémité la surface d'appui de porte-objet (72), dans lequel le dispositif d'aide à la focalisation (70) comprend de préférence un capot recouvrant la zone d'extrémité de l'objectif à l'infini (16) orientée vers le porte-objet (14), dans lequel est prévue une ouverture de passage optique entourée par la surface d'appui de porte-objet (72).

7. Microscope selon l'une des revendications précédentes,
**caractérisé en ce que** la surface d'appui d'aide à la focalisation (72) entoure l'axe optique (OA) de l'objectif à l'infini (16) à distance radiale en formant une ouverture optique de passage.

8. Microscope selon la revendication 6 ou 7,
**caractérisé en ce que** la surface d'ouverture de l'ouverture de passage, orthogonale à l'axe optique (OA), est plus petite que la surface d'ouverture, orthogonale à l'axe optique (OA), d'une ouverture de l'objectif à l'infini (16) la plus proche du porte-objet (14).

9. Microscope selon l'une des revendications précédentes,
**caractérisé en ce que** la direction d'extension de la ligne d'action de la force élastique (F1) dudit au moins un premier ressort (50) est différente de la direction d'extension de la ligne d'action de la force élastique (F2) dudit au moins un deuxième ressort (54) dans une grande partie des positions relatives possibles, de préférence dans toutes les positions relatives possibles.

10. Microscope selon l'une des revendications précédentes,
**caractérisé en ce que** la composante de la force élastique (F1) du premier agencement de ressort (40) agissant parallèlement à l'axe optique (OA) dans une plage de mouvement de Hook de l'objectif à l'infini (16) par rapport au boîtier est sensiblement linéairement proportionnelle à la course de mouvement relative.

11. Microscope selon la revendication 10,
**caractérisé en ce que** la composante axiale (72ax) de la force élastique (F2) du deuxième agencement de ressort (52) agissant parallèlement à l'axe optique (OA) dans la plage de mouvement de Hook de l'objectif à l'infini (16) par rapport au boîtier (36) est sensiblement non linéairement proportionnelle au trajet de mouvement.

12. Microscope selon la revendication 11,
**caractérisé en ce qu'**une inclinaison de la ligne d'action de force (F2) dudit au moins un deuxième ressort (54) par rapport à l'axe optique (OA) ou, si la ligne d'action de force (F2) et l'axe optique (OA) ne se coupent pas, par rapport à une parallèle à l'axe optique (OA) coupant la ligne d'action de force (F2), varie en fonction de la position axiale relative de l'objectif à l'infini (16) par rapport au boîtier (36).

13. Microscope selon la revendication 12,
**caractérisé en ce que** l'angle d'inclinaison (α) compris entre la ligne d'action de force (F2) dudit au moins un deuxième ressort (54) et l'axe optique (OA) ou ses parallèles, respectivement, diminue avec un déplacement axial relatif de l'objectif à l'infini (16) par rapport au boîtier (36), dans lequel de préférence lorsque les composantes axiales des forces de ressort des premier et deuxième agencements de ressort (40, 52) est orientée dans la même direction, la valeur de la force élastique du deuxième ressort (54) diminue également avec une composante axiale de la force élastique (F1) du premier agencement de ressort (40) dont la valeur diminue en raison du déplacement axial relatif, mais diminue de manière particulièrement préférée moins fortement que le cosinus de l'angle d'inclinaison inclus (α) n'augmente.

14. Microscope selon l'une quelconque des revendications 9 à 13,
**caractérisé en ce que** le premier agencement de ressort (40) comprend deux ou trois ou plus premiers agencements de ressorts partiels (42, 44) qui sont espacés les uns des autres le long de l'axe optique (OA) et dont chacun comprend deux ou trois ou quatre ou plus premiers ressorts (50).

15. Microscope selon l'une quelconque des revendications 9 à 14,
**caractérisé en ce que** ledit au moins un premier ressort (50) est un ressort à lame dont une extrémité longitudinale est reliée au boîtier (36) et dont l'autre extrémité longitudinale est reliée à l'objectif à l'infini (16), éventuellement avec interposition d'un porte-objectif (38), dans lequel de préférence ledit au moins un premier ressort (50) est incurvé entre ses extrémités longitudinales, de manière particulièrement préférée avec l'axe optique (OA) comme axe de courbure.

16. Microscope selon la revendication 15,
**caractérisé en ce que** le ressort à lame (50) présente une dimension radiale supérieure à sa dimension axiale, de préférence sa dimension radiale est supérieure à 5 fois, de manière particulièrement préférée supérieure à 10 fois, de manière la plus préférée supérieure à 20 fois la dimension axiale.

17. Microscope selon l'une quelconque des revendications 9 à 16,
**caractérisé en ce que** ledit au moins un deuxième ressort (54) est un ressort à branches dont les branches de ressort d'extrémité sont reliées entre elles par une section de ressort à lame ou de ressort hélicoïdal, une extrémité longitudinale libre d'une branche de ressort étant reliée au boîtier (36) et une extrémité longitudinale libre de l'autre branche de ressort respective étant reliée à l'objectif (16), le cas échéant avec interposition d'un porte-objectif (38).

18. Microscope selon l'une des revendications 9 à 17,
**caractérisé en ce que** l'une des butées de ressort (56, 58) dudit au moins un deuxième ressort (54), de préférence une butée de ressort (58) côté boîtier, peut être déplacée pour modifier une précontrainte dudit au moins un deuxième ressort (54).

19. Microscope selon l'une des revendications 9 à 18,
**caractérisé en ce que** l'objectif à l'infini (16) est maintenu sur le boîtier (36) du porte-objectif (34), le cas échéant avec interposition d'un porte-objectif (38), exclusivement par le premier et le deuxième dispositif à ressort (40, 52).

20. Microscope selon l'une des revendications 9 à 18, en incluant la revendication 5,
**caractérisé en ce que** l'objectif à l'infini (16) est maintenu sur le boîtier (36) du porte-objectif (34) exclusivement par le premier et le deuxième agencement de ressort (40, 52) ainsi que par un composant de transmission de force (66) de l'entraînement (62), le cas échéant avec interposition d'un porte-objectif (38).
